(19) **Europäisches Patentamt / European Patent Office / Office européen des brevets**

(11) **EP 3 967 982 B1**

(12) **EUROPEAN PATENT SPECIFICATION**

(45) Date of publication and mention of the grant of the patent:
**23.04.2025 Bulletin 2025/17**

(21) Application number: **19926030.8**

(22) Date of filing: **29.09.2019**

(51) International Patent Classification (IPC):
*G01D 5/48* (2006.01)     *G01D 21/02* (2006.01)
*G01K 11/26* (2006.01)     *G01L 1/16* (2006.01)

(52) Cooperative Patent Classification (CPC):
**G01D 5/48; G01D 21/02; G01K 11/265; G01L 1/16**

(86) International application number:
**PCT/CN2019/109223**

(87) International publication number:
**WO 2020/215611 (29.10.2020 Gazette 2020/44)**

(54) **MULTI-PARAMETER SURFACE ACOUSTIC WAVE SENSING DEVICE, MANUFACTURING METHOD, AND AIRCRAFT MONITORING SYSTEM**

AKUSTISCHE MEHRPARAMETEROBERFLÄCHENWELLENSENSORVORRICHTUNG, HERSTELLUNGSVERFAHREN UND FLUGZEUGÜBERWACHUNGSSYSTEM

DISPOSITIF DE DÉTECTION D'ONDES ACOUSTIQUES DE SURFACE À PARAMÈTRES MULTIPLES, PROCÉDÉ DE FABRICATION ET SYSTÈME DE SURVEILLANCE D'AÉRONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2019 CN 201910333404**
**26.04.2019 CN 201910323574**
**30.04.2019 CN 201910329640**

(43) Date of publication of application:
**16.03.2022 Bulletin 2022/11**

(73) Proprietor: **North University of China**
**Taiyuan, Shanxi 030051 (CN)**

(72) Inventors:
• **TAN, Qiulin**
**Taiyuan, Shanxi 030051 (CN)**
• **ZHANG, Yongwei**
**Taiyuan, Shanxi 030051 (CN)**

• **KOU, Hairong**
**Taiyuan, Shanxi 030051 (CN)**
• **ZHANG, Wendong**
**Taiyuan, Shanxi 030051 (CN)**

(74) Representative: **Ström & Gulliksson AB**
**P.O. Box 793**
**220 07 Lund (SE)**

(56) References cited:
CN-A- 1 237 828     CN-A- 101 933 230
CN-A- 102 193 001     CN-A- 104 764 902
CN-A- 105 890 661     CN-A- 105 930 755
CN-A- 106 918 719     CN-A- 107 515 062
CN-A- 108 988 817     CN-A- 110 068 400
CN-A- 110 071 212     CN-A- 110 081 918
GB-A- 2 142 429     GB-A- 2 142 429
US-A- 4 454 440     US-A1- 2007 089 525
US-A1- 2010 158 071     US-A1- 2012 242 190

## Description

## TECHNICAL FIELD

The present application relates to the technical field of measurement, and in particular to a multi-parameter surface acoustic wave sensing device, a manufacturing method therefor and an aircraft monitoring system.

## BACKGROUND

Flight processes of aircrafts are often accompanied by severe environments such as high temperature and high rotation. Key parts of the aircraft, especially a surface of a hypersonic aircraft, an aero-engine and a combustion gas turbine and other key parts have local temperature exceeding 800°C. Therefore, it is of great significance for the material selection, structural design and protective measures of aircrafts to monitor temperature, pressure and vibration parameters in the severe environment in situ and in real time.

As a core component of the aero-engine, a combustion chamber is used to convert chemical energy in the fuel into heat energy through combustion, and heat a high-pressure cavity after being pressurized by a compressor to an allowable turbine inlet temperature and the performance of the combustion chamber directly affects the entire performance of the aero-engine.

Pressure pulsation caused by a thermal-acoustic-structure coupling effect in the combustion chamber will cause unstable fuel combustion, which results in vibration and fatigue of components, mainly being thin-walled parts, of the combustion chamber, such that the service life of the combustion chamber is shortened and that of the engine is shortened.

By obtaining the temperature, pressure, vibration and other parameters in the combustion chamber, it is possible to timely know the working conditions of the combustion chamber, so as to take measures timely to prevent damage to the thin-walled parts of the combustion chamber. In the traditional method, it can only use temperature sensors, pressure sensors and vibration sensors respectively to obtain respective parameter, needs to dispose many interfaces for these sensors, thereby having complicated lead, which is not suitable for use in the severe working environment of high temperature, high pressure and high rotation such as the combustion chamber.

Publication number US2012242190A1 discloses a surface acoustic wave sensor sensing pressure, temperature, etc., by using a SAW. The SAW sensor includes: a substrate having one of its surfaces formed with a cavity having a predetermined depth; a piezoelectric plate which has piezoelectricity, adhered to the surface in which the cavity is formed, so as to cover the cavity of the substrate; a pressure resonator which is installed to a portion of the piezoelectric plate that corresponds to the cavity groove, and which generates a SAW due to a radio frequency (RF) signal applied thereto.

Publication number GB2124429A discloses a vibration sensor comprising a cantilever flexible beam bearing on one surface a surface acoustic wave structure, the beam being supported for a portion of its length from one end on a rigid support member and carrying on its unsupported portion a mass of damping material whereby during flexural vibration of the beam standing waves in the beam due to flexural waves reflected from the unsupported end of the beam are eliminated, the surface acoustic wave structure being located about the position of maximum flexing of the beam during vibration. The surface acoustic wave structure may be a simple delay line or it may include reflectors to form a resonant cavity.

## BRIEF SUMMARY

The present application provides a multi-parameter surface acoustic wave sensing device, a manufacturing method therefor, and an aircraft monitoring system so as to solve technical problems in the prior art and in situ detect and remotely monitor temperature, pressure and vibration parameters simultaneously in severe environments, thereby ensuring the safe flight of an aircraft by controlling it based on real-time obtained parameters.

According to the present application, a multi-parameter surface acoustic wave sensing device is provided, including a high-temperature-resistant piezoelectric crystal substrate, a first resonator, a second resonator, and a third resonator distal to each other, which correspond to a surface acoustic wave vibration sensor, a surface acoustic wave pressure sensor and a surface acoustic wave temperature sensor respectively, forming multiple surface acoustic wave sensors;

A cantilever beam having a first thickness is formed on an edge portion of the high-temperature-resistant piezoelectric crystal substrate at a side and a cavity is formed in a remaining portion of the high-temperature-resistant piezoelectric crystal substrate except the cantilever beam, the remaining portion has a second thickness, the first thickness is smaller than the second thickness;

The high-temperature-resistant piezoelectric crystal substrate has a flat first surface, the first resonator is formed on the first surface at a position corresponding to the cantilever beam and configured to sense vibration parameters; the second resonator is formed on the first surface at a position corresponding to the cavity and configured to sense pressure parameters; and the third resonator is formed on the first surface and configured to sense temperature parameters;

The high-temperature-resistant piezoelectric crystal substrate has a second surface opposite to the first surface, an answering antenna is formed on the second surface of the remaining portion, and is electrically connected to the first resonator, the second resonator and the third resonator.

According to the present application, a multi-parameter aircraft monitoring system is further provided, including a signal transmitting device, a signal processing device and the above-mentioned multi-parameter surface acoustic wave sensing device;

The multi-parameter surface acoustic wave sensing device is installed at a position to be measured, the answering antenna is configured to receive an excitation signal transmitted by the signal transmitting device; the third resonator is configured to generate a temperature response signal based on the excitation signal and a temperature at the position to be measured; the second resonator is configured to generate a pressure response signal based on the excitation signal and a pressure at the position to be measured; the first resonator is configured to generate a vibration response signal based the excitation signal and vibration at the position to be measured; and the answering antenna is further configured to transmit a superposed signal to the signal transmitting device, formed by superposing the temperature response signal, the pressure response signal and the vibration response signal;

The signal transmitting device is configured to transmit the excitation signal to the multi-parameter surface acoustic wave sensing device and forward the received superimposed signal to the signal processing device; and

The signal processing device is configured to separate the temperature response signal, the pressure response signal, and the vibration response signal from the superimposed signal and extract temperature parameters from the temperature response signal, and pressure parameters from the pressure response signal and vibration parameters from the vibration response signal.

According to the present application, a method for preparing the above-mentioned multi-parameter surface acoustic wave sensing device is further provided, including:

Step 1, cutting off an edge portion of a first high-temperature-resistant wafer at a side, and etching a groove and a first through via on a remaining portion;
Step 2, etching a second through via at a position corresponding to the first through via on a second high-temperature-resistant wafer having the same diameter as the first high-temperature-resistant wafer;
Step 3, bonding the edge portion of the second high-temperature-resistant wafer to the first high-temperature-resistant wafer in an aligned mode to seal the groove and form a cavity, so that the first through via and the second through via communicate, and a portion of the second high-temperature-resistant wafer that extends beyond the first high-temperature-resistant wafer forms a cantilever beam, wherein the first high-temperature-resistant wafer and the second high-temperature-resistant wafer bonded together form the high-temperature-resistant piezoelectric crystal substrate;
Step 4, forming an answering antenna on a second surface of the first high-temperature-resistant wafer facing away from the second high-temperature-resistant wafer;
Step 5, filling the first through via and the second through via with an electrically conductive material, and electrically connecting the electrically conductive material to the answering antenna; and
Step 6, forming a first resonator, a second resonator, and a third resonator on a first surface of the second high-temperature-resistant wafer distal to the first high-temperature-resistant wafer and forming a first electrode wire and a second electrode wire electrically connected with the conductive material, wherein the first resonator is formed on the cantilever beam, the second resonator is formed on the cavity, and the first electrode wire is electrically connected to a first electrode group of the first resonator, the second resonator, and the third resonator, and the second electrode wire is electrically connected to a second electrode group of the first resonator, the second resonator, and the third resonator.

In the multi-parameter surface acoustic wave sensing device according to the present application, three resonators are formed on the same high-temperature-resistant piezoelectric crystal substrate, and the characteristics of the piezoelectric crystal substrate that can generate and propagate surface acoustic waves are used to form three sensors. The first resonator is formed on the cantilever beam to sense vibration well, the second resonator is formed on the cavity to sense pressure parameters well, and the third resonator may sense temperature parameters well, such that a sensing device has the functions of simultaneously acquiring the three parameters of vibration, pressure and temperature, and the answering antenna is adopted to transmit electrical signals in a wireless manner, and thus the multi-parameter surface acoustic wave sensing device requires no additional interfaces and leads, and has simple structure and better stability in severe working environment. In addition, since respective resonators are disposed far away from each other, the interference between electrical signals is reduced, and by adopting the piezoelectric crystal substrate made of high-temperature-resistant materials, it may avoid damaging the sensing device in a high-temperature environment.

In the multi-parameter aircraft monitoring system according to the present application, since the surface acoustic wave sensor is used in the multi-parameter surface acoustic wave sensing device, that is, a signal acquiring device, this type of sensor may acquire the excitation signal remotely from the outside using the surface acoustic wave technology in a wireless and passive manner, may convert the excitation signal into a temperature response signal, a pressure response signal and a vibration response signal that changes based on the temperature, pressure and vibration of the position to be measured, and may also transmit these response signals to the signal transmitting device remotely in a wireless and passive manner so that the signal processing device may extract temperature parameters, pressure parameters, and vibration parameters, and remotely monitoring the temperature, pressure and vibration parameters in severe environments simultaneously, thereby ensuring the safe flight of an aircraft by controlling it based on real-time obtained parameters.

## BRIEF DESCRIPTION OF THE DRAWINGS

In order to explain the technical solutions disclosed in the embodiments of the present application or the prior art more clearly, drawings used in the description of embodiments or the prior art will be briefly illustrated below. The drawings in the following description are only some of the embodiments of the present application, and other drawings can be obtained according to these drawings without any creative effort for those skilled in the art.

FIG. 1 is a perspective exploded schematic diagram of a multi-parameter surface acoustic wave sensing device according to an embodiment of the present application;

FIG. 2 is a partial cross-sectional view of the multi-parameter surface acoustic wave sensing device shown in FIG. 1;

FIG. 3 is a schematic structural diagram showing a first surface of the multi-parameter surface acoustic wave sensing device shown in FIG. 1;

FIG. 4 is a schematic structural diagram showing a second surface of the multi-parameter surface acoustic wave sensing device shown in FIG. 1;

FIG. 5 is a waveform diagram of a resonant frequency generated during the simulation operation of the multi-parameter surface acoustic wave sensing device shown in FIG. 1;

FIG. 6 is a flow chart of a method for preparing a multi-parameter surface acoustic wave sensing device according to an embodiment of the present application;

FIGS. 7a to 7g are schematic structural diagrams showing formation of some steps of the method shown in FIG. 6;

FIG. 8 is a schematic structural diagram showing formation of various steps of another method for preparing a multi-parameter surface acoustic wave sensing device according to an embodiment of the present application;

FIG. 9 is a structural block diagram of a multi-parameter aircraft monitoring system according to an embodiment of the present application;

FIG. 10 is a perspective exploded schematic diagram of a signal acquiring device of the system shown in FIG. 9;

FIG. 11a is a schematic structural diagram of a first surface of the high-temperature-resistant piezoelectric crystal substrate in the signal acquiring device shown in FIG. 10;

FIG. 11b is a schematic structural diagram of a second surface of the high-temperature-resistant piezoelectric crystal substrate in the signal acquiring device shown in FIG. 10;

FIG. 12 is a structural block diagram of another multi-parameter aircraft monitoring system according to an embodiment of the present application;

FIG. 13 is a flowchart of a method for processing a high-temperature-resistant hard and brittle material according to an embodiment of the present application;

FIG. 14 is a flowchart of another method for processing a high-temperature-resistant hard and brittle material according to an embodiment of the present application;

FIG. 15 is a schematic flow chart of forming a groove by LGS wet etching according to an embodiment of the present application;

FIG. 16 is a schematic flow chart of forming a groove by LGS plasma etching;

FIG. 17 is a schematic structural diagram of a device for processing a high-temperature-resistant hard and brittle material according to an embodiment of the present application;

FIG. 18 is a schematic structural diagram of another device for processing a high-temperature-resistant hard and brittle material according to an embodiment of the present application; and

FIG. 19 is a schematic structural diagram of a sample fixing device in FIG. 18.

## DETAILED DESCRIPTION

In order to illustrate the objectives, technical solutions and advantages of the present application clearly, the technical solutions in the embodiments of the present application will be described clearly and completely in conjunction with the accompanying drawings in the embodiments of the present application. The described embodiments are part of the embodiments of the present application, rather than all of the embodiments. All other embodiments obtained by a person of ordinary skill in the art based on the embodiments of the present utility model without any creative effort fall within the protection scope of the present utility model.

In order to explain the technical solution of the present application clearly, the embodiments of the present application are described in detail in conjunction with the accompanying drawings

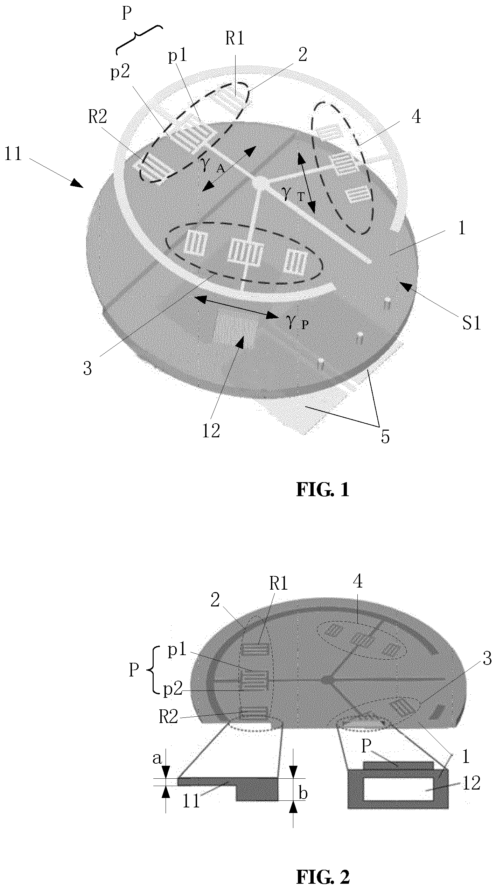

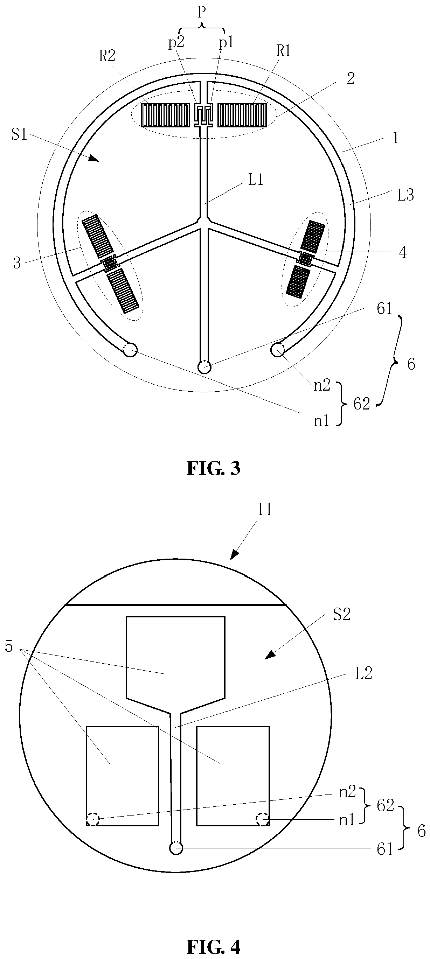

FIG. 1 is a perspective exploded schematic diagram of a multi-parameter surface acoustic wave sensing device according to an embodiment of the present application; FIG. 2 is a partial cross-sectional view of the multi-parameter surface acoustic wave sensing device shown in FIG. 1; FIG. 3 is a schematic structural diagram showing a first surface of the multi-parameter surface acoustic wave sensing device shown in FIG. 1; and FIG. 4 is a schematic structural diagram showing a second surface of the multi-parameter surface acoustic wave sensing device shown in FIG. 1. As shown in FIGS. 1 to 4, a multi-parameter surface acoustic wave sensing device is provided, including a high-temperature-resistant piezoelectric crystal substrate 1, a first resonator 2, a second resonator 3, and a third resonator 4 distal to each other. In an embodiment, a cantilever beam 11 having a first thickness a is formed on an edge portion of the high-temperature-resistant piezoelectric crystal substrate 1 at a side and a cavity 12 is formed in a remaining portion of the high-temperature-resistant piezoelectric crystal substrate except the cantilever beam 11, the remaining portion has a second thickness b, the first thickness a is smaller than the second thickness b. The high-temperature-resistant piezoelectric crystal substrate 1 has a flat first surface S1, the first resonator 2 is formed on the first surface S1 corresponding to the cantilever beam 11 and configured to sense vibration parameters; the second resonator 3 is formed on the first surface S1 corresponding to the cavity 12 and configured to sense pressure parameters; and the third resonator 4 is formed on the first surface and configured to sense temperature parameters.

In addition, the high-temperature-resistant piezoelectric crystal substrate 1 has a second surface S2 opposite to the first surface, an answering antenna 5 is formed on the second surface S2 of the remaining portion having a second thickness b, and is electrically connected to the first resonator 2, the second resonator 3 and the third resonator 4.

In the above-mentioned multi-parameter surface acoustic wave sensing device, multiple surface acoustic wave sensors are constituted by forming a plurality of resonators on a piezoelectric crystal substrate 1. During operation, these sensors receive pulse excitation signals through the answering antenna, transmit these pulse excitation signals to each resonator through electrical connection between the answering antenna 5 and each resonator, and these resonators excite the excitation signal on the piezoelectric crystal substrate 1 to generate a surface acoustic waves, such that the electrical signals are converted into surface acoustic waves. The surface acoustic waves are propagated on the piezoelectric crystal substrate 1 and converted into a resonant signal by the resonator, and then the resonant signal is emitted through the answering antenna and thus the acoustic waves are converted into the electric signal. When the pressure, vibration, temperature and other parameters of the environment where the multi-parameter surface acoustic wave sensing device is located change, the piezoelectric crystal substrate 1 will have changed physical parameters, so that the surface acoustic wave will have changed propagation speed. Correspondingly, the resonance signal also has changed frequency, and the corresponding parameter changes may be obtained by detecting the frequency change of the resonant signal.

The piezoelectric crystal substrate 1 of the above-mentioned multi-parameter surface acoustic wave sensing device has a cantilever beam 11 with a first thickness a smaller than the second thickness b of the remaining portion of the piezoelectric crystal substrate 1, so that the thin portion of the piezoelectric crystal substrate 1 having a smaller thickness can better sense the vibration parameters. That is to say, when the piezoelectric crystal substrate 1 vibrates, the cantilever beam 11 is more likely to produce large-amplitude vibration. By forming the first resonator 2 on the first surface S1, the measurement accuracy of vibration parameters may be improved.

A cavity 12 is formed in the remaining portion with the second thickness b of the piezoelectric crystal substrate 1 of the above-mentioned multi-parameter surface acoustic wave sensing device. As shown in FIG. 2, the piezoelectric crystal substrate 1 at upper and lower sides of the cavity 12 has smaller thickness. When the piezoelectric crystal substrate 1 is under pressure, the piezoelectric crystal substrate 1 at the cavity 12 will be deformed, so that the surface acoustic wave passing through the piezoelectric crystal substrate 1 at the cavity 12 has changed propagation speed. By forming the second resonator 3 on the first surface S1 corresponding to the cavity 12, pressure parameters may be sensed accurately. It should be noted that FIG 2 shows a partial enlarged view of the cantilever beam 11 and the cavity 12, respectively. In order to show these two parts more clearly, the cavity 12 has a larger enlargement ratio than the cantilever beam 11. It should be noted that FIGS. 3 and 4 only schematically show the interdigital transducer P, although interdigital transducers P have inconsistent number with that of the interdigital transducer P shown in FIGS. 1 and 2, they have completely the same function as the interdigital transducer P in the resonator with the same serial number shown in FIGS. 1 and 2, and are used as a component of the resonator to generate a resonance signal in the present application.

In addition, when the temperature changes, the piezoelectric crystal substrate 1 will also have changed physical parameters. Correspondingly, the surface acoustic wave passing on it will also have changed propagation speed. By forming a third resonator 4 on the first surface S1, temperature parameter may be sensed accurately. By disposing respective resonators far away from each other, mutual interference between electrical signals can be avoided to the greatest extent, thereby improving the measurement accuracy. The aforementioned piezoelectric crystal substrate 1 is made of high-temperature-resistant materials, so that the multi-parameter surface acoustic wave sensing device can be used in a high-temperature environment such as the combustion chamber of an aero-engine. The materials known to those skilled in the art are lanthanum gallium silicate crystal crystals, aluminum nitride ceramics, etc.

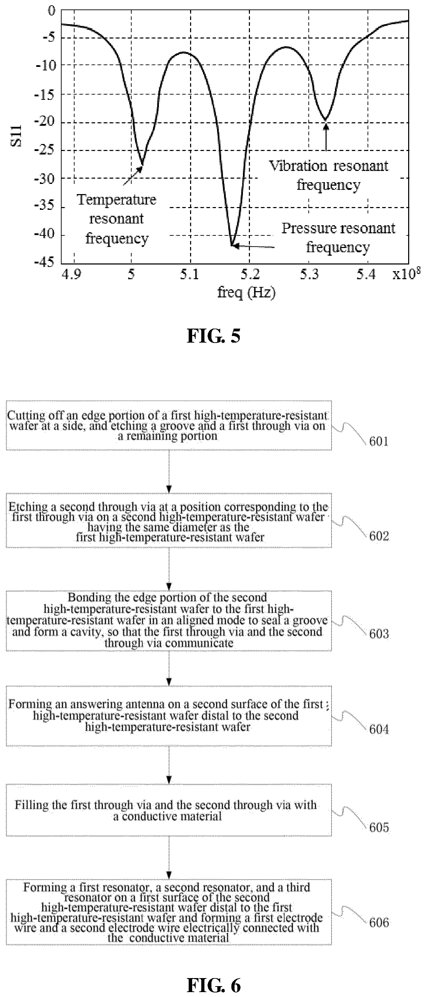

In addition, as known to those skilled in the art, by designing the size of each resonator, the range of resonant frequency of each resonator can be independent of each other without overlapping. FIG. 5 is a waveform diagram of a resonant frequency generated during the simulation operation of the multi-parameter surface acoustic wave sensing device shown in FIG. 1. As shown in FIG. 5, the horizontal ordinate is the frequency and the temperature resonant frequency, vibration resonant frequency and pressure resonant frequency are independent of each other and do not overlap and thus the measurement accuracy of parameter may be improved.

In addition, in the above embodiments, the high-temperature-resistant piezoelectric crystal substrate may be made of lanthanum gallium silicate preferably. The lanthanum gallium silicate ($La_3Ga_5SiO_{14}$) crystal has excellent high-temperature resistance and has no any phase change from a room temperature to a melting point and thus it is widely used in high-temperature environments such as aerospace, weaponry, automobiles, energy and chemical industries.

In the embodiment of the present application, the severe environment-oriented high-temperature-resistant lanthanum gallium silicate piezoelectric material solves the problem that the performance of the sensor substrate is degraded in the high temperature environment. An integrated sensor constructed from temperature-, pressure-, vibration-sensitive elements and an antenna by the surface acoustic wave measurement principle solves the limited application problem of real-time in-situ acquisition of multiple parameters in severe environments. A non-contact signal reading technology is adopted to solve the temperature limitation problem caused by lead connection failure. Further, by integrating temperature-, pressure-, and vibration- sensitive elements with the antenna, the device is also miniaturized.

In the multi-parameter surface acoustic wave sensing device according to an embodiment of the present application, three resonators are formed on the same high-temperature-resistant piezoelectric crystal substrate, and the characteristics of the piezoelectric crystal substrate that can generate and propagate surface acoustic waves are used to form three sensors. The first resonator is formed on the cantilever beam to sense vibration well, the second resonator is formed on the cavity to sense pressure parameters well, and the third resonator may sense temperature parameters well, such that a sensing device has the functions of simultaneously acquiring the three parameters of vibration, pressure and temperature, and the answering antenna is adopted to transmit electrical signals in a wireless manner, and thus the multi-parameter surface acoustic wave sensing device requires no additional interfaces and leads, and has simple structure and better stability in severe working environment.

In addition, since the resonators are disposed far away from each other, the interference between electrical signals is reduced. As shown in FIGS. 1 to 3, the resonators are preferably disposed angularly at 120 degree angles in the circumferential direction, so that the distance between the resonators is the farthest to reduce the interference between electrical signals to the greatest extent. In addition, by adopting the piezoelectric crystal substrate made of high-temperature-resistant materials, it may avoid damaging the sensing device in a high-temperature environment.

In the foregoing embodiment, respective resonators are distributed in a relative sensitive propagation direction of the piezoelectric crystal substrate. As those skilled in the art know, piezoelectric crystals are anisotropic materials and need to be cut during the process of making the substrate. The piezoelectric crystals have different properties in different cut surfaces and propagation directions. There are many different physical quantity-sensitive propagation directions on the cut completely piezoelectric crystal substrate. In certain propagation direction, as the temperature parameter of the substrate changes, the surface acoustic wave generated by the resonator will have significantly changed propagation velocity and this propagation direction is a temperature-relatively sensitive propagation direction. In certain propagation direction, as the vibration parameter of the substrate changes, the surface acoustic wave generated by the resonator will have significantly changed propagation velocity and this propagation direction is a vibration-relatively sensitive propagation direction. In certain propagation direction, as the pressure parameter of the substrate changes, the surface acoustic wave generated by the resonator will have significantly changed propagation velocity and this propagation direction is a pressure-relatively sensitive propagation direction.

Specifically, the first resonator 2 is disposed along the vibration-relatively sensitive propagation direction $\gamma_A$ so that the surface acoustic waves generated by exciting the first resonator 2 propagate along the vibration-relatively sensitive propagation direction $\gamma_A$; the second resonator 3 is disposed along the pressure-relatively sensitive propagation direction $\gamma_P$ so that the surface acoustic waves generated by exciting the second resonator 3 propagate along the pressure-relatively sensitive propagation direction $\gamma_P$ and the third resonator 4 is disposed along the temperature-relatively sensitive propagation direction $\gamma_T$ so that the surface acoustic waves generated by exciting the third resonator 4 propagate along the temperature-relatively sensitive propagation direction $\gamma_T$. By disposing respective resonators in this way, respective resonators can sense each parameter more accurately, thereby improving the sensing accuracy of the sensing device.

In the above-mentioned embodiment, the first resonator, the second resonator and the third resonator may each include an interdigital transducer P, a first reflecting grating R1 located on a side of the interdigital transducer P, and a second reflecting grating R2 located on another side of the interdigital transducer P. The interdigital transducer P has two groups of electrodes arranged in the form of interdigital, one of which is a first electrode group p1 electrically connected to a feeder terminal of the answering antenna 5, and the other thereof is a second electrode group p2 electrically connected to a ground terminal of the answering antenna 5.

As those skilled in the art know, the resonant frequency of a resonator is related to electrode widths of the interdigital transducer and the reflecting grating. By designing the electrode widths of the resonator, the resonant frequency of each resonator cannot overlap (as shown in FIG. 5) and thus the sensing accuracy can be effectively improved.

The multi-parameter surface acoustic wave sensing device according to the foregoing embodiment may further include an electrode through via 6 penetrating through the first surface S1 and the second surface S2, and the electrode through via 6 is filled with a conductive material for electrically connecting the answering antenna 5 with the first resonator 2, the second resonator 3, and the third resonator 4. By disposing the electrode through via 6 filled with the conductive material, three resonators disposed on the first surface S1 and the answering antenna 5 disposed on the second surface S2 may have the shortest electrical connection lines, which may not only save the manufacturing cost of the sensing device, but also prevent excessive noise interference and energy loss caused by excessively long electrical connection lines.

In the above embodiment, the electrode through via 6 may include a feeder through via 61 and a ground through via 62. The feeder terminal of the answering antenna 5 is electrically connected to first electrode groups p1 of the first resonator 2, the second resonator 3, and the third resonator 4 through the feeder through via 61 and the ground terminal of the answering antenna 5 is electrically connected to second electrode groups p2 of the first resonator 2, the second resonator 3, and the third resonator 4 through the ground via 62.

As shown in FIGS. 1 to 4, the electrode through via 6 can be disposed on the edge portion of the high-temperature-resistant piezoelectric crystal substrate 1. On the first surface S1, the first electrode group p1 of the interdigital transducer P of each resonator is electrically connected together by linear leads L1 and electrically connected to the conductive material inside the feeder through via 61. On the second surface S2, the feeder terminal of the answering antenna is also electrically connected to the conductive material inside the feeder through via 61 through the linear lead L2, thereby providing the electrical connection between the first electrode group p1 and the feeder terminal. In addition, on the first surface S1, the second electrode group p2 of the interdigital transducer P of each resonator is electrically connected together by the arc-shaped lead L3, and is electrically connected to the conductive material inside the ground through via 62 and on the second surface S2, the ground terminal of the answering antenna 5 is electrically connected to the conductive material inside the ground through via 62, thereby providing the electrical connection between two second electrode groups p2 and the ground terminal.

As known to those skilled in the art, the above-mentioned lead wires are not limited to the wiring form shown in the figures, and any lead wiring form capable of providing electrical connection, such as a broken line shape, a curved shape, etc., may be used in the present application.

In the above embodiment, the ground through via 62 may include a first ground through via n1 and a second ground through via n2 as shown in the FIGS 3 to 4, which are symmetrically disposed on both sides of the feeder through via 61. In this arrangement, on the one hand, the aesthetics of the component arrangement is considered. On the other hand, the ground through via 62 is usually grounded, and it is beneficial for the entire sensing device to reliably ground by symmetrically disposing the ground through via 62 on both sides with the feeder through via 61 as the center.

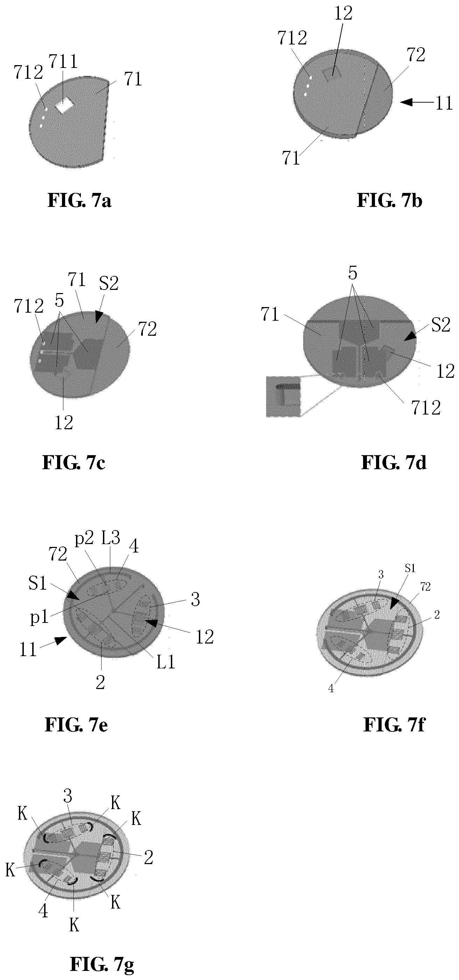

According to an embodiment of the present application, a method for preparing the above embodiment of the multi-parameter surface acoustic wave sensing device is further provided. FIG. 6 is a flow chart of a method for preparing a multi-parameter surface acoustic wave sensing device according to an embodiment of the present application and FIGS. 7a to 7g are schematic structural diagrams showing formation of some steps of the method shown in FIG. 6. As shown in FIGS. 6 and 7a to 7g, the method includes the following steps:

Step 601, cutting off an edge portion of a first high-temperature-resistant wafer 71 at a side, and etching a groove 711 and a first through via 712 on a remaining portion, as shown in FIG. 7a.

Step 602, etching a second through via at a position corresponding to the first through via 712 on a second high-temperature-resistant wafer 72 having the same diameter as the first high-temperature-resistant wafer 71.

Step 603, bonding the edge portion of the second high-temperature-resistant wafer 72 to the first high-temperature-resistant wafer 71 in an aligned mode to seal a groove 711 and form a cavity 12, so that the first through via 712 and the second through via communicate, and a portion of the second high-temperature-resistant wafer 72 that extends beyond the first high-temperature-resistant wafer 71 forms a cantilever beam 11, as shown in FIG. 7b.

Wherein the communicated first through via 712

and the second through via constitute an electrode through via; in the present embodiment, three electrode through vias are formed, the through via in the middle is a feeder through via, and the symmetrical through vias on both sides are ground through vias.

Step 604, forming an answering antenna 5 on a second surface S2 of the first high-temperature-resistant wafer 71 distal to the second high-temperature-resistant wafer 72, as shown in FIG. 7c.

In the present embodiment, the answering antenna 5 is formed with three parts, the middle part is the feeder terminal, and the symmetrical parts on both sides are the ground terminals;

Step 605, filling the first through via 712 and the second through via with a conductive material, and allowing the conductive material to be electrically connected to the answering antenna 5, as shown in FIG. 7d;

in the present embodiment, allowing the ground terminal of the answering antenna 5 to be electrically connected to the ground through via, and the feeder terminal of the answering antenna 5 to be electrically connected to the feeder through via; and

Step 606, forming a first resonator 2, a second resonator 3, and a third resonator 4 on a first surface S1 of the second high-temperature-resistant wafer 72 distal to the first high-temperature-resistant wafer 71 and forming a first electrode wire L1 and a second electrode wire L3 electrically connected with the conductive material as shown in FIG. 7e, wherein the first resonator 2 is formed on the cantilever beam 11, the second resonator 3 is formed on the cavity 12, and the first electrode wire L1 is electrically connected to a first electrode group p1 of the first resonator 2, the second resonator 3, and the third resonator 4, and the second electrode wire L3 is electrically connected to a second electrode group p2 of the first resonator 2, the second resonator 3, and the third resonator 4;

In the present embodiment, the first electrode wire L1 is electrically connected to the feeder through via, and both ends of the second electrode wire L3 are respectively electrically connected to the ground through via located on both sides of the feeder through via.

For the second high-temperature-resistant wafer 72, in certain physical quantity-sensitive propagation direction, as the temperature parameter of the substrate changes, the surface acoustic wave generated by the resonator will have significantly changed propagation velocity and this propagation direction is a temperature-relatively sensitive propagation direction $\gamma_T$. In certain propagation direction, as the vibration parameter of the substrate changes, the surface acoustic wave generated by the resonator will have significantly changed propagation velocity and this propagation direction is a vibration-relatively sensitive propagation direction $\gamma_A$. In

certain propagation direction, as the pressure parameter of the substrate changes, the surface acoustic wave generated by the resonator will have significantly changed propagation velocity and this propagation direction is a pressure-relatively sensitive propagation direction $\gamma_P$.

The first resonator 2 may be disposed along the vibration-relatively sensitive propagation direction so that the surface acoustic waves generated by exciting the first resonator 2 propagate along the vibration-relatively sensitive propagation direction; the second resonator 3 may be disposed along the pressure-relatively sensitive propagation direction so that the surface acoustic waves generated by exciting the second resonator 3 propagate along the pressure-relatively sensitive propagation direction and the third resonator 4 may be disposed along the temperature-relatively sensitive propagation direction so that the surface acoustic waves generated by exciting the third resonator 4 propagate along the temperature-relatively sensitive propagation direction. By disposing respective resonators in this way, respective resonators can sense each parameter more accurately, thereby improving the sensing accuracy of the sensing device.

In the method for preparing the multi-parameter surface acoustic wave sensing device according to an embodiment of the present application, three resonators are formed on the same high-temperature-resistant piezoelectric crystal substrate, and the characteristics of the piezoelectric crystal substrate that can generate and propagate surface acoustic waves are used to form three sensors. The first resonator is formed on the cantilever beam to sense vibration well, the second resonator is formed on the cavity to sense pressure parameters well, and the third resonator may sense temperature parameters well, such that a sensing device has the functions of simultaneously acquiring the three parameters of vibration, pressure and temperature, and the answering antenna is adopted to transmit electrical signals in a wireless manner, and thus the multi-parameter surface acoustic wave sensing device requires no additional interfaces and leads, and has simple structure and better stability in severe working environment.

In the preparation method according to the foregoing embodiment, step 606, that is, the step of forming three resonators on the first surface S1, may include the following steps:

Step 6061, coating a positive photoresist on the first surface S1;

Step 6062, forming a mask structure of a resonator through a photoetching mask process;

Step 6063, forming a metal layer by magnetron sputtering on the first surface where the mask structure of a resonator is formed, wherein the metal layer may be a silver layer;

Step 6064, stripping off a remaining positive photoresist; and

Step 6065, performing high-temperature annealing in a nitrogen atmosphere to form the first resonator 2, the second resonator 3, and the third resonator 4.

In the foregoing embodiment, the method for preparing the multi-parameter surface acoustic wave sensing device may further include the following steps:

Step 607, sputtering a protective layer film on the first surface S1, as shown in FIG. 7f; and
Step 608, coating wave-absorbing materials K between the first resonator 2 and the second resonator 3, between the second resonator 3 and the third resonator 4, and between the third resonator 4 and the first resonator 2, as shown in FIG. 7g.

The protective layer film is disposed to have a function of covering an electrical component formed by surfaces of the first high-temperature-resistant wafer 71 and the second high-temperature-resistant wafer 72 so as to avoid the damage to electrical components caused by temperature, pressure, vibration and other factors during use of the multi-parameter surface acoustic wave sensing device The protective layer film may be aluminum oxide ($Al_2O_3$), aluminum nitride (AlN), or the like. Coating the wave-absorbing materials between two adjacent resonators has a function of reducing the crosstalk among signals of the resonators.

In addition, in the step 601 of the foregoing embodiment, the groove may be etched on the first high-temperature-resistant wafer 71 by a wet etching process.

In the step 604 of the foregoing embodiment, specifically, silver paste may be used to print the answering antenna 5 on the second surface S2 through a screen printing process, and then the formed answering antenna 5 may be sintered at a low temperature in an environment of 100°C.

In step 605 of the foregoing embodiment, the through via may be filled with silver paste, and then high-temperature sintering is performed according to the sintering curve of the silver paste.

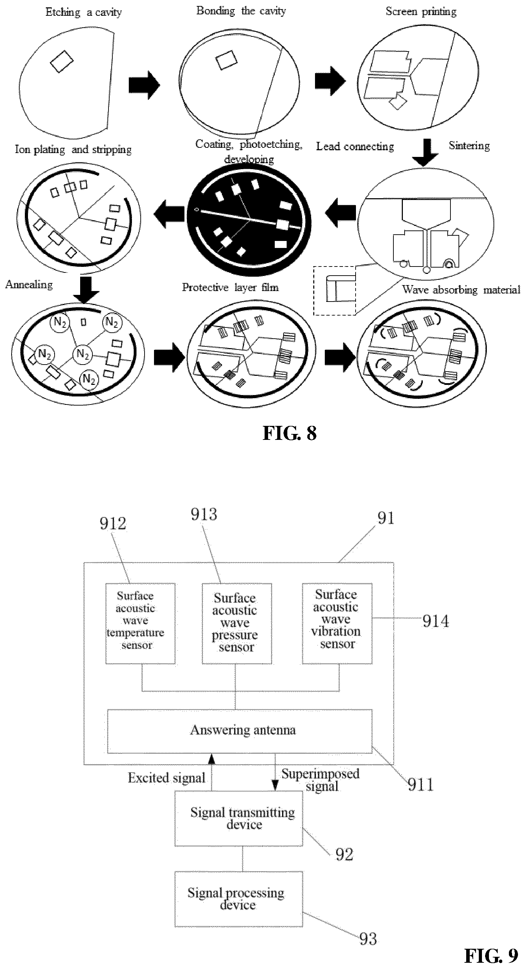

FIG. 8 is a schematic structural diagram showing formation of various steps of another method for preparing a multi-parameter surface acoustic wave sensing device according to an embodiment of the present application. As shown in FIG. 8, structures formed in each step are disposed in the direction indicated by the arrow. Specifically, the method includes the following steps:

(1) etching a groove on a lanthanum gallium silicate substrate using a wet etching process;
(2) forming a sealed cavity and a cantilever beam structure by a bonding process;
(3) printing an answering antenna at a backside using a silver paste through a screen printing process, and performing low-temperature sintering in an environment of 100°C;
(4) filling the through via with the silver paste, and performing high-temperature sintering according to the silver paste sintering curve;
(5) forming a metal electrode mask structure using a positive photoresist through a photoetching mask process;
(6) forming a surface acoustic wave electrode structure by magnetron sputtering of metal, and stripping off the unexposed positive photoresist, wherein the metal may specifically be silver;
(7) performing high-temperature annealing on the device in a nitrogen ($N_2$) atmosphere to form a dense metal electrode structure;
(8) sputtering a protective layer film, such as $Al_2O_3$, AlN; and
(9) coating a wave-absorbing material beside each reflecting grating so as to reduce the crosstalk of each resonant unit.

Using the multi-parameter surface acoustic wave sensing device formed by this method, one sensing device can obtain three parameters of vibration, pressure and temperature at the same time, and electrical signals may be transmitted in a wireless manner through the answering antenna such that the sensing device needs no additional interfaces and leads and has simple structure and better stability in severe working environment.

FIG. 9 is a structural block diagram of a multi-parameter aircraft monitoring system according to an embodiment of the present application. As shown in FIG. 9, the multi-parameter monitoring system according to the present embodiment includes: a signal acquiring device 91, a signal transmitting device 92, and a signal processing device 93.

The signal acquiring device 91 is installed at a position to be measured, usually on a skin surface of the aircraft, a surface of the turbine blade of an engine, a surface of the combustion chamber of the engine, etc., and configured to measure parameters such as temperature, pressure, vibration and the like of the position to be measured. In the present embodiment, the signal acquiring device 91 may be the multi-parameter surface acoustic wave sensing device in any of the above-mentioned embodiments and the first resonator, the second resonator, and the third resonator of the multi-parameter surface acoustic wave sensing device correspond to a surface acoustic wave vibration sensor, a surface acoustic wave pressure sensor and a surface acoustic wave temperature sensor according to the present embodiment, respectively.

The signal acquiring device 91 includes an answering antenna 911, a surface acoustic wave temperature sensor 912, a surface acoustic wave pressure sensor 913, and a surface acoustic wave vibration sensor 914 electrically connected to the answering antenna 911. The answering antenna 911 is configured to receive an excitation signal transmitted by the signal transmitting device 92; the surface acoustic wave temperature sensor 912 is configured to generate a temperature response signal based on the excitation signal and a temperature at the position to be measured; the surface acoustic wave pressure sensor 913 is configured to generate a pressure response signal based on the excitation signal and a pressure at the position to be measured; and a surface acoustic wave vibration sensor 914 is configured to generate a vibration response signal based on the excitation signal and a vibration at the position to be measured. The answering antenna 911 is further configured to transmit a superimposed signal to the signal transmitting device 92 wherein the superimposed signal is formed by superimposing the temperature response signal, the pressure response signal, and the vibration response signal.

The signal transmitting device 92 is configured to transmit the excitation signal to the signal acquiring device 91, and is configured to forward the received superimposed signal to the signal processing device 93. The signal processing device 93 is configured to separate the temperature response signal, the pressure response signal, and the vibration response signal from the superimposed signal and extract temperature parameters from the temperature response signal, and pressure parameters from the pressure response signal and vibration parameters from the vibration response signal.

When the multi-parameter monitoring system operates, respective surface acoustic wave sensors in the signal acquiring device 91 receives the excitation signal through the answering antenna 911, and the excitation signal is transferred to respective surface acoustic wave sensors through the electrical connection between the answering antenna 911 and respective surface acoustic wave sensors. The respective surface acoustic wave sensors may generate surface acoustic waves on the surface of the piezoelectric crystal of the sensor using a surface acoustic wave technology based on the excitation signal transmitted by the signal transmitting device 92. The physical properties of the piezoelectric crystal may change due to the temperature, pressure and vibration at the position to be measured such that the changes cause response signals with different frequencies from the excitation signal in the sensor, specifically a temperature response signal, a pressure response signal, and a vibration response signal. These response signals are superimposed and then transmitted through the answering antenna 911. When the pressure, vibration, temperature and other parameters at the position to be measured change, these response signals will have changed frequencies. The signal transmitting device 92 forwards the received superimposed signal to the signal processing device 93 for processing, and finally temperature parameters, pressure parameters, and vibration parameters may be extracted.

In the multi-parameter aircraft monitoring system based on the surface acoustic wave technology according to an embodiment of the present application, since the surface acoustic wave sensor is used in the signal acquiring device, this type of sensor may acquire the excitation signal remotely from the outside using the surface acoustic wave technology in a wireless and passive manner, may convert the excitation signal into a temperature response signal, a pressure response signal and a vibration response signal that changes based on the temperature, pressure and vibration of the position to be measured, and may also transmit these response signals to the signal transmitting device remotely in in a wireless and passive manner so that the signal processing device may extract temperature parameters, pressure parameters, and vibration parameters, and remotely monitoring the temperature, pressure and vibration parameters in severe environments simultaneously, thereby ensuring the safe flight of an aircraft by controlling it based on real-time obtained parameters.

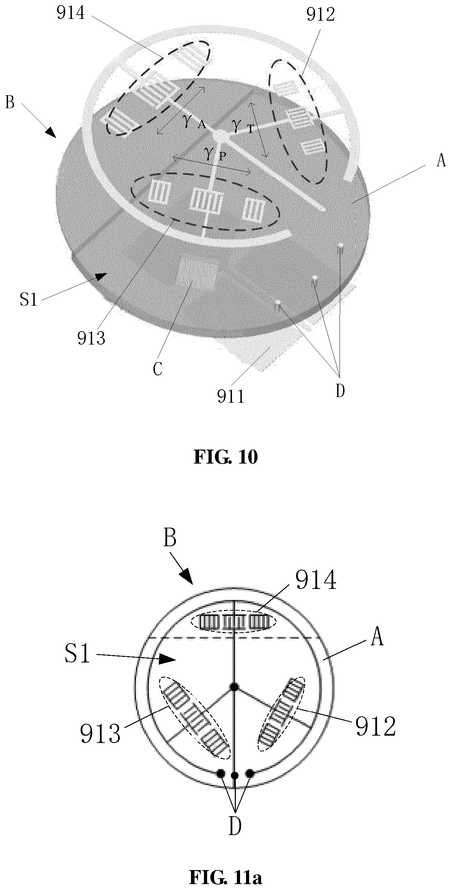

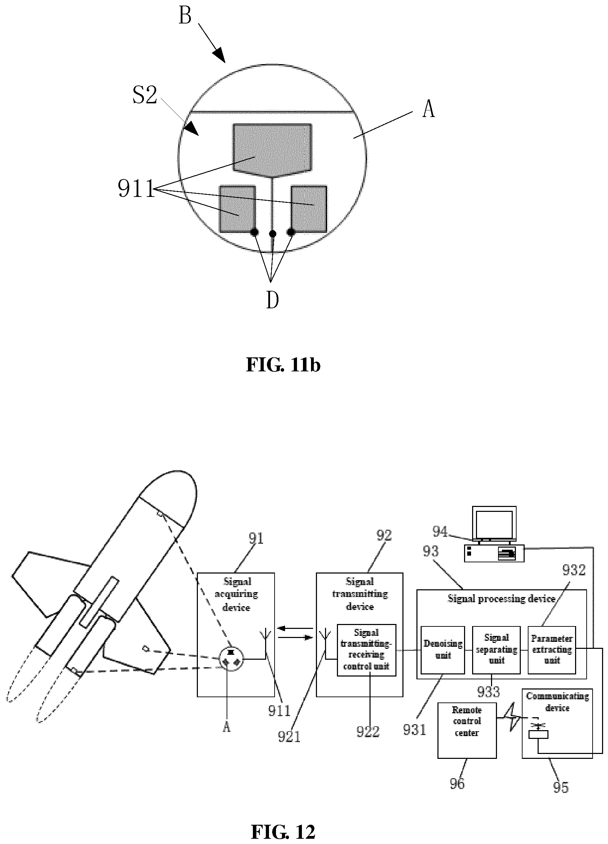

FIG. 10 is a perspective exploded schematic diagram of the signal acquiring device of the system shown in FIG. 9; FIG. 11a is a schematic structural diagram of a first surface of the high-temperature-resistant piezoelectric crystal substrate in the signal acquiring device shown in FIG. 10; and FIG. 11b is a schematic structural diagram of a second surface of the high-temperature-resistant piezoelectric crystal substrate in the signal acquiring device shown in FIG. 10. As shown in FIGS. 10, 11a, and 11b, the signal acquiring device 91 according to the foregoing embodiment may further include a high-temperature-resistant piezoelectric crystal substrate A. The high-temperature-resistant piezoelectric crystal substrate A has a first surface S1 and a second surface S2 opposite to each other. A thin-thickness cantilever beam B is formed on an edge portion of the high-temperature-resistant piezoelectric crystal substrate A at a side and a sealed cavity C is formed in the remaining portion of the high-temperature piezoelectric crystal substrate A.

The above-mentioned surface acoustic wave vibration sensor 914 is formed on the first surface S1 corresponding to the cantilever beam B, the surface acoustic wave pressure sensor 913 is formed on the first surface S1 corresponding to the cavity C, and the surface acoustic wave temperature sensor 912 is formed on the first surface S1 far away from the surface acoustic wave vibration sensor 914 and the surface acoustic wave pressure sensor 913. The answering antenna 911 is formed on the second surface S2. The high-temperature-resistant piezoelectric crystal substrate A has an electrode through via D filled with conductive materials, and the answering antenna 911 is electrically connected to the surface acoustic wave temperature sensor 912, the surface acoustic wave pressure sensor 913, and the surface acoustic wave vibration sensor 914 through the electrode through via D.

The high-temperature-resistant piezoelectric crystal substrate A can be used to prevent the damage to signal acquiring device 91 when the position to be measured where the signal acquiring device 91 is located is in a high temperature environment.

The high-temperature-resistant piezoelectric crystal substrate A of the signal acquiring device 91 has a cantilever beam B with a first thickness smaller than the second thickness of the remaining portion of the piezoelectric crystal substrate A, so that the thin portion of the piezoelectric crystal substrate A having a smaller thickness can better sense the vibration parameters. That is to say, when the piezoelectric crystal substrate A vibrates, the cantilever beam B is more likely to produce large-amplitude vibration. By forming the surface acoustic wave vibration sensor 914 on the first surface S1 corresponding to the cantilever beam B, the measurement accuracy of vibration parameters may be improved.

A cavity C is formed in the remaining portion of the high-temperature-resistant piezoelectric crystal substrate A of the signal acquiring device 91 and the piezoelectric crystal substrate A at upper and lower sides of the cavity C has smaller thickness. When the piezoelectric crystal substrate A is under pressure, the piezoelectric crystal substrate A at the cavity C will be deformed, so that the surface acoustic wave passing through the piezoelectric crystal substrate A has changed propagation speed. By forming the surface acoustic wave pressure sensor 913 on the first surface S1 corresponding to the cavity C, pressure parameters may be sensed accurately.

In addition, when the temperature changes, the piezoelectric crystal substrate A will also have changed physical parameters. Correspondingly, the surface acoustic wave passing on it will also have changed propagation speed. By forming the surface acoustic wave temperature sensor 912 on the first surface S1, temperature parameter may be sensed accurately. Disposing the surface acoustic wave temperature sensor 912 far away from the surface acoustic wave pressure sensor 913 and the surface acoustic wave vibration sensor 914, mutual interference between electrical signals may be avoided to the greatest extent, thereby improving the measurement accuracy.

By disposing the electrode through via D filled with the conductive material, three surface acoustic wave resonators disposed on the first surface S1 and the answering antenna 911 disposed on the second surface S2 may have the shortest electrical connection lines, which may not only save the manufacturing cost of the signal acquiring device, but also prevent excessive noise interference and energy loss caused by excessively long electrical connection lines.

In the multi-parameter aircraft monitoring system based on the surface acoustic wave technology according to the foregoing embodiment, the high-temperature-resistant piezoelectric crystal substrate A has a temperature-relatively sensitive propagation direction $\gamma_T$, a pressure-relatively sensitive propagation direction $\gamma_P$, and a vibration-relatively sensitive propagation direction $\gamma_A$. The surface acoustic wave vibration sensor 914 is preferably disposed along the vibration-relatively sensitive propagation direction $\gamma_A$ so that the surface acoustic waves generated by exciting the surface acoustic wave vibration sensor 914 propagate along the vibration-rela-

tively sensitive propagation direction $\gamma_A$; the surface acoustic wave pressure sensor 913 is disposed along the pressure-relatively sensitive propagation direction $\gamma_P$ so that the surface acoustic waves generated by exciting the surface acoustic wave pressure sensor 913 propagate along the pressure-relatively sensitive propagation direction $\gamma_P$ and the surface acoustic wave temperature sensor 912 is disposed along the temperature-relatively sensitive propagation direction $\gamma_T$ so that the surface acoustic waves generated by exciting the surface acoustic wave temperature sensor 912 propagate along the temperature-relatively sensitive propagation direction $\gamma_T$.

In the foregoing embodiment, respective surface acoustic wave sensors are distributed in a relative sensitive propagation direction of the piezoelectric crystal substrate A. As those skilled in the art know, piezoelectric crystals are anisotropic materials and need to be cut during the process of making the substrate. The piezoelectric crystals have different properties in different cut surfaces and propagation directions. There are many different physical quantity-sensitive propagation directions on the cut completely piezoelectric crystal substrate A. In certain propagation direction, as the temperature parameter of the substrate A changes, the surface acoustic wave generated by the surface acoustic wave temperature sensor 912 will have significantly changed propagation velocity and this propagation direction is a temperature-relatively sensitive propagation direction $\gamma_T$. In certain propagation direction, as the vibration parameter of the substrate A changes, the surface acoustic wave generated by the surface acoustic wave vibration sensor 914 will have significantly changed propagation velocity and this propagation direction is a vibration-relatively sensitive propagation direction $\gamma_A$. In certain propagation direction, as the pressure parameter of the substrate A changes, the surface acoustic wave generated by the surface acoustic wave pressure sensor 913 will have significantly changed propagation velocity and this propagation direction is a pressure-relatively sensitive propagation direction $\gamma_P$.

In the foregoing embodiment, the surface acoustic wave temperature sensor 912, the surface acoustic wave pressure sensor 913, and the surface acoustic wave vibration sensor 914 are disposed angularly at 120 degree angles in the circumferential direction of the high-temperature-resistant piezoelectric crystal substrate A, so that the distance between respective sensors is the farthest to reduce the interference between electrical signals to the greatest extent.

FIG. 12 is a structural block diagram of another multi-parameter aircraft monitoring system according to an embodiment of the present application. As shown in FIG. 12, the signal processing device 93 may include a denoising unit 931, a signal separating unit 933, and a parameter extracting unit 932. The denoising unit 931 is configured to denoise the superimposed signal formed by superposing the temperature response signal, the pressure response signal, and the vibration response signal. The superposed signal is denoised to generate a denoised superimposed signal. The signal separating unit 933 is configured to separate the denoised temperature response signal, the denoised pressure response signal, and the denoised vibration response signal from the denoised superimposed signal. The parameter extracting unit 932 is configured to extract temperature parameters from the denoised temperature response signal, pressure parameters from the denoised pressure response signal, and vibration parameters from the denoised vibration response signal, respectively.

The above-mentioned signal processing device 93 is configured to extract frequency information in the superimposed signal formed by superimposing each response signal forwarded from the signal transmitting device by analyzing the superimposed signal, thereby obtaining various parameters. In the actual operation process of the above-mentioned system, a background environment may have various interference signals rather than an absolutely pure environment. These interference signals cause great noise interference to the operation of the surface acoustic wave sensor, and even they may overwhelm the response signals of the sensor. At present, there are three main methods for de-noising the response signals during the operation process of the surface acoustic wave sensor:

1) Time-domain gating extraction algorithm, referred to as a first method: a frequency-domain response signal of the superimposed signal generated by exciting the sensors and a frequency-domain response signal with only the background environment are inversely Fourier transformed into the time domain at the same time to form a sensor time-domain response signal and a background time-domain response signal, the sensor time-domain response signal is compared with the background time-domain response signal in a time domain segment, time-domain segments of the sensor time-domain response signal that are different from the background time-domain response signal are intercepted, and is then Fourier transformed into the frequency domain to obtain the denoised superimposed signal, which may filter out the interference of most of background clutter.

It should be noted that the signal transmitting device 92 may receive an external signal including the background environment signal and the superimposed signal generated by exciting the aforementioned sensor. n the absence of superimposed signal, the signal transmitting device 92 may obtain the frequency-domain response signal with only the background environment; and in the presence of the superimposed signal, the signal transmitting device 92 may obtain the frequency-domain response signal in the superimposed signal, which contains the frequency-domain response signal with only the background environment.

2) background subtraction technology, referred to as a second method: the background response signal pre-stored in the signal processing device 93 is subtracted in terms of vector in the time domain or frequency domain from the superimposed signal generated by exciting the above-mentioned sensors to obtain the superimposed signal from which the background clutter interference is theoretically eliminated.

3) physical denoising technology: organic or inorganic high-temperature-resistant wave-absorbing materials are coated among various surface acoustic wave sensors or a metal shield is made so as to create a local "microwave darkroom" and minimize serious interference from background clutters.

The above-mentioned denoising unit 931 may be configured to perform the above-mentioned first method or the second method so as to generate denoised superimposed signal. The signal separating unit 933 of the signal processing device 93 is then configured to separate the denoised superimposed signal to obtain the denoised temperature response signal, the denoised pressure response signal, and the denoised vibration response signal. Thereafter, the parameter extracting unit 932 of the signal processing device 93 is configured to extract the temperature parameters, pressure parameters and vibration parameters by calculating respective denoised response signals using the following equation.

The denoised temperature response signal has a frequency value of Ft. After being tested, the frequency value Ft has a good linear relationship with the extracted temperature parameter Tc (that is, the temperature at the position to be measured) and the relationship is as follows:

$$Tc = T0 + (Ft + F1)/KT$$

where T0 is a calibrated temperature value; F1 is a resonant frequency corresponding to the calibrated temperature; KT is a temperature frequency coefficient, which is related to the properties of the piezoelectric material, a temperature and a designed operating frequency, and can be regarded as a fixed value within a certain operating temperature range. After the surface acoustic wave temperature sensor is manufactured, the calibrated temperature value T0, the resonant frequency F1 corresponding to the calibrated temperature, and the temperature frequency coefficient KT are all constants.

The denoised pressure response signal has a frequency value of Fp. After being tested, the frequency value Fp has a good linear relationship with the extracted pressure parameter Pc (that is, the pressure at the position to be measured) and the relationship is as follows:

$$Pc = P0 + (Fp + F2)/KP$$

where P0 is a calibrated pressure value; F2 is a resonant frequency corresponding to the calibrated pressure; KP is a pressure frequency coefficient, which is related to the properties of the piezoelectric material, a temperature, a cavity and a designed operating frequency, and can be regarded as a fixed value within a certain operating temperature range. After the surface acoustic wave temperature sensor is manufactured, the calibrated pressure value P0, the resonant frequency F2 corresponding to the calibrated pressure, and the pressure frequency coefficient KP are all constants.

The denoised vibration response signal has a frequency value of Fc. After being tested, the frequency value Fc has a good linear relationship with the extracted vibration parameter a (that is, the vibration at the position to be measured) and the relationship is as follows:

$$a = (Fc + F0)/Ka$$

where F0 is a corresponding resonant frequency when the acceleration is 0; Ka is an acceleration frequency coefficient, which is related to the properties of the piezoelectric material, the cantilever beam and the designed operating frequency, and may be regarded as a fixed value within a certain operating temperature range; and the corresponding resonant frequency F0 when the acceleration is 0 and the acceleration frequency coefficient Ka are both constant.

In the multi-parameter monitoring system for aircrafts based on the surface acoustic wave technology according to the foregoing embodiment, as shown in FIG. 12, the signal transmitting device 92 may include an interrogating antenna 921 and a signal transmitting-receiving control unit 922. The interrogating antenna 921 is configured to transmit an excitation signal and receive a superimposed signal formed by superimposing a temperature response signal, a pressure response signal, and a vibration response signal. The signal transmitting-receiving control unit 922 is configured to generate the above excitation signal and forward the excitation signal to the interrogating antenna 921, and receive the superimposed signal from the interrogating antenna 921 and forward the superimposed signal to the signal processing device 93.

The interrogating antenna 921 has a bidirectional function of transmitting the excitation signal and receiving the superimposed signals. The signal transmitting-receiving control unit 922 provides this function by controlling the interrogating antenna 921. The signal transmitting-receiving control unit 922 generates an excitation signal through an internal preset program and forwards it to the interrogating antenna 921 so as to transmit it to the signal acquiring device 91.

Denoising the received response signal by the signal processing device 93 may be performed using an electromagnetic wave polarization technology in which the interrogating antenna 921 has an opposite polarization mode to the extracted background clutter by appropriately designing the polarization mode of the interrogating antenna 921, thereby suppressing the background clutter.

The multi-parameter monitoring system for aircrafts based on the surface acoustic wave technology according to the foregoing embodiment may further include an airborne control device 94, the airborne control device 94 is configured to obtain the temperature parameter, the pressure parameter, and the pressure parameter from the signal processing device 93 and control an aircraft to which the position to be measured belongs, being based on the temperature parameter, the pressure parameter, and the vibration parameter.

The airborne control device 94 is specifically a device installed on an aircraft to allow users to control various parts of the aircraft and may be a computer or a device composed of multiple computers. In the above-mentioned embodiment, except that signal acquiring device 91 is disposed in the position to be measured of the aircraft, the signal transmitting device 92 and the signal processing device 93 may be disposed in the cockpit of the aircraft together with the airborne control device 94, so that the user of the aircraft can use these devices to have an understanding of the operating status of the aircrafts in order to better control the aircraft.

The multi-parameter monitoring system for aircrafts based on the surface acoustic wave technology according to the foregoing embodiment may further include a communicating device 95 and a remote control center 96 connected to the communicating device 95 in a wireless manner. The communicating device 95 is configured to obtain the temperature parameter, the pressure parameter, and the vibration parameter from the signal processing device 93, and forward them to the remote control center 96. The remote control center 96 is configured to determine a safety status of the aircraft to which the position to be measured belongs based on the temperature parameter, the pressure parameter, and the vibration parameter.

In an embodiment, the communicating device 95 is installed on the aerospace aircraft, and the remote control center 96 is disposed in a fixed building on the ground. The communicating device 95 is connected to the remote control center 6 in a wireless manner, either via satellite or via microwave signals. The remote control center 96 may be configured to store, analyze, and pre-warn the various parameters measured at the position to be measured forwarded by the communicating device 95 so as to determine a safety status of the aircraft. If these parameters exceed allowable ranges, an alarm may be given and the staff on the ground shall be notified to take necessary measures, or the users of aircrafts may be also notified to take necessary measures.

In the above-mentioned embodiment of the present application, when the second resonator in the multi-parameter surface acoustic wave sensor device, that is, the surface acoustic wave pressure sensor is prepared, a sealed cavity needs to be formed, and the sealed cavity formed can still be stable in the high-temperature environment, so that the surface acoustic wave sensing device can have stable detection performance in severe environments such as high temperature. In the following embodiment of the present application, a method for preparing the above-mentioned cavity is provided. It should be noted that the preparation method in the following embodiments are also applicable to the preparation of groove or beam structures by a bonding method.

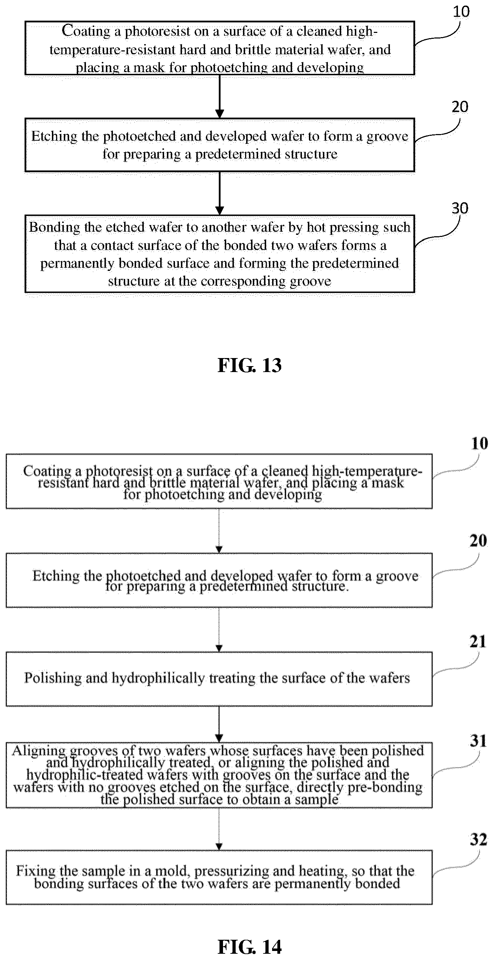

FIG. 13 is a flowchart of a method for processing a high-temperature-resistant hard and brittle material according to an embodiment of the present application. As shown in FIG. 13, the method according to the present embodiment includes:

Step 10, coating a photoresist on ta surface of a cleaned high-temperature-resistant hard and brittle material wafer, and placing a mask for photolithographic development.

Hard and brittle piezoelectric materials such as lanthanum gallium silicate crystals are ideal materials for manufacturing surface acoustic wave devices due to high temperature resistance that is not easy to phase change under high temperature conditions. A sealed cavity is needed generally when the lanthanum gallium silicate crystals are used to prepare a surface acoustic wave device for detecting pressure parameters. The pressure parameters can be sensed accurately by sensing the change in the propagation speed of the surface acoustic wave caused by the deformation of the cavity.

**In** order to prepare the required cavity on the high-temperature-resistant piezoelectric material, in the embodiment of the present application, a processing method of a semiconductor device is first used to prepare a groove forming the cavity, and includes such steps as photoetching, etching and other process steps. Similar to the preparation of the semiconductor device, two wafers that have formed with grooves by etching are bonded by hot pressing to form a sealed cavity or a wafer that has formed with grooves by etching and another unetched wafer with a flat surface are bonded by hot pressing to form a sealed cavity. **In** this step, a pattern to be etched for forming the groove is temporarily transferred to the wafer by a photoetching technology having similar operation to the manufacture of semiconductor devices, including cleaning, coating, exposing and developing the wafer.

First, acetone is used to clean the lanthanum gallium silicate wafer and isopropanol and a mixed solution of $H_2O_2$ and $H_2SO_4$ are used to remove residual organic matter on the surface of the lanthanum gallium silicate. After cleaning, an SU-8 photoresist is spin-coated on the surface of the lanthanum gallium silicate wafer, where the thickness of the photoresist is $200\mu$m to prevent adhesion problems caused by acid molecules penetrating through the photoresist.

Since the cleaned wafer has a hydrophilic surface, and the photoresist is mostly hydrophobic, in order to solve the problem of poor adhesion between the photoresist and the edge of the lanthanum gallium silicate, an HDMS (hexamethyldisilamine) layer is deposited on the surface of the lanthanum gallium silicate wafer so as to improve adhesion of the photoresist. Before coating the photoresist, the process further includes a tackifying step, that is, coating the surface of the wafer with a tackifier. HMDS is easy to adhere to the surface of the wafer as well as to the photoresist, thus enhancing adhesion between the photoresist and wafer.

In the embodiment of the present application, the photolithography, etching and other processes are used to process the sealed cavity. The photoresist may be a negative photoresist, which can not only meet the processing accuracy requirements, but also have strong adhesive capacity and corrosion resistance. Therefore, the photoresist in the present embodiment is negative photoresist such as SU-8 photoresist having a low light absorption rate in the near-ultraviolet light range, so that it has better exposure uniformity over the entire thickness of the photoresist. The mask has a consistent pattern with the shape of the formed cavity. After the photoresist is coated, the mask is placed in parallel with the lanthanum gallium silicate substrate coated with the photoresist, and then exposed to UV and developed. The photoresist of the mask corresponding to cavity is dissolved and removed, and the wafer is finally cleaned with deionized water.

The method of coating the photoresist may be a vapor coating method or a spin coating method. In the embodiment of the present application, the spin coating method is preferred, and the thickness of the photoresist may be controlled by controlling the rotation speed. Coating the tackifier can also be applied by a vapor coating method or a spin coating method.

Step 20, etching the photoetched and developed wafer to form a groove for preparing a predetermined structure.

The photoresist of the photoetched wafer at the mask in the above step 10 is dissolved and the wafer substrate is directly exposed. In this step, a groove is formed here by etching. In specific applications, the etching process may be wet etching or dry etching.

Wet etching: a mixed solution of hydrochloric acid and phosphoric acid ($HCl:H_3PO_4=1:1$) is prepared and heated to 80°C and the LGS wafer coated with photoresist is etched. The mixed solution makes the surface of LGS smooth and has faster corrosion rate while maintaining the surface flatness of the LGS wafer, wherein the temperature in a reaction tank has an important influence on the corrosion rate. The corrosion rate may be controlled by controlling the temperature in a reaction tank. After the lanthanum gallium silicate wafer has been etched for a period of time, the groove has a satisfied depth, the wafer is cleaned with deionized water, and then the SU-8 photoresist is stripped off, a microscope is used to observe the etching effect and obtain the groove for forming the desired LGS cavity.

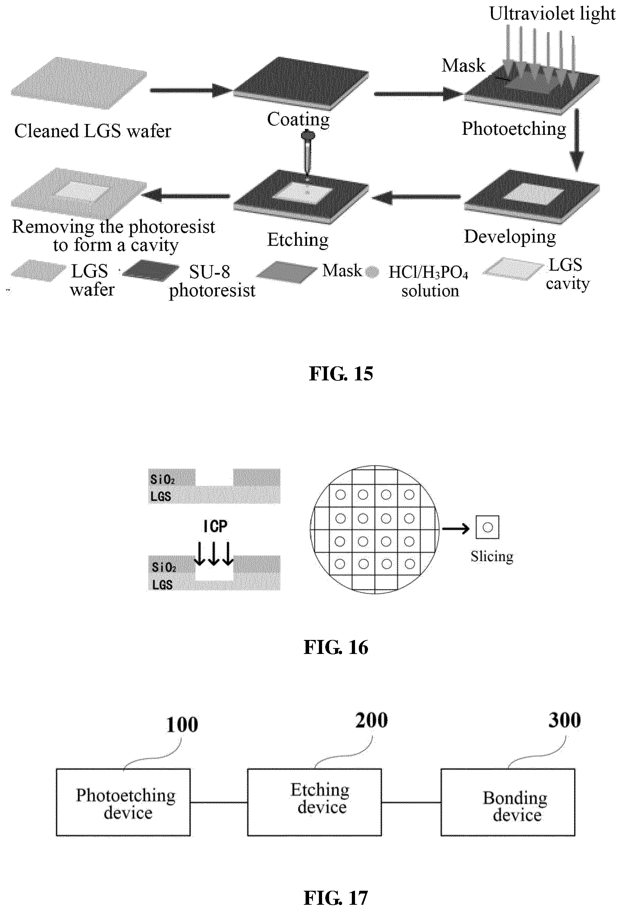

FIG. 15 is a schematic flow chart of forming a groove by LGS wet etching according to an embodiment of the present application. As shown in FIG. 15, the LGS wafer is first cleaned to form a clean LGS wafer. Then, a surface of the wafer is uniformly coated with a photoresist, i.e., SU-8 photoresist. The mask is placed at position to be etched of the uniformly coated surface, exposed to ultraviolet light and developed and the SU-8 photoresist at the mask is dissolved. Another surface of the wafer is uniformly coated with a photoresist, etched with a $HCl/H_3PO_4$ solution, the groove is etched on the wafer that is not covered by photoresist, and the photoresist on the surface of the wafer is finally removed to obtain a LGS wafer formed with a groove on the surface.

Dry etching: using an inductively coupled plasma etching technology (ICP). The lanthanum gallium silicate substrate is cleaned with deionized water, alcohol and acetone to remove dust, oil and organic matter on the surface of the substrate; a layer of silicon dioxide ($SiO_2$) is grown on the surface of lanthanum gallium silicate substrate as a hard mask material using chemical vapor deposition; a LGS wafer with the mask is placed in a plasma etching zone, the surface of the etched wafer is bombarded by ions in the gas inside the reaction chamber under the action of bias of the reaction chamber to form a damaged layer, thereby accelerating the reaction of free active groups in the plasma on its surface. Ion bombardment exhibits the anisotropy of dry etching, and the reaction of free active groups is well inhibited due to the deposition of the sidewalls. Due to the combination of physical reaction and chemical reaction of dry etching, the size and shape of the pattern may be precisely controlled under the interaction of anisotropy and isotropy, so that the etched groove has higher accuracy. FIG. 16 is a schematic flow chart of forming a groove by LGS plasma etching according to an embodiment of the present application. As shown in FIG. 16, since the size and shape of the pattern may be precisely controlled, plasma etching can be used to form multiple patterns at a time, and the multiple patterns are finally sliced and cut to prepare the device.

The predetermined structure in the embodiment of the present application may be a sealed cavity in the surface acoustic wave device for measuring pressure parameters, or may be a single groove structure, a multi-groove structure or a beam structure for other specific purposes.

Step 30: bonding the etched wafer to another wafer by hot pressing such that a contact surface of the bonded two wafers forms a permanently bonded surface and forming the predetermined structure at the corresponding groove.

Bonding two wafers in this step may include aligning the etched wafer and another non-etched wafer and then bonding or may include aligning two etched wafers and then bonding.

If the groove is formed into the predetermined structure such as a cavity and two wafers can be firmly connected under high temperature operating environment, atoms at the interface of the two wafers must be able to form a stable bond connection, so that the two wafers are integrated due to the bonding strength. Therefore, it is necessary to apply certain mechanical pressure and heat treatment after the two wafers are joined together. In the embodiment of the present application, two wafer substrates are directly bonded, that is, the grooves formed after etching are aligned so that the surfaces of the two wafers are in direct contact, and then pressurized and heated to cause physical and chemical reactions at the interfaces of the wafers to form a bonding connection so as to permanently bond the two wafers and the required predetermined structure is finally formed. Compared with other methods for forming predetermined structures such as a cavity, such as high-temperature adhesive bonding, the predetermined structure formed by the direct bonding method according to the present application not only has high strength, but also keeps an integrated structure under high temperature environments, such that a stable performance is maintained and it is more suitable for piezoelectric device applications in high temperature and severe environment.

According to the embodiment of the present application, a groove for preparing a predetermined structure is formed by photoetching and etching processes. By controlling the processing accuracy of the corresponding process, the processing accuracy of the groove may be effectively guaranteed, and a failure rate during the processing of hard and brittle materials is reduced. two wafers are directly bonded by hot pressing, so that atoms at the interface of the two wafers may form a stable bond connection, and the two wafers are integrated due to the bonding strength, thereby preparing the predetermined structure of hard and brittle materials, and the device with such a predetermined structure can maintain stable detection performance for a long time under high temperature and severe environment, thereby prolonging the service life of the device.

In the above embodiment, in order to provide the atomic-level inter-displacement and interpenetration during the bonding, the surfaces of the mutually bonded wafers should be kept flat, smooth and clean. Suitable polishing and cleaning processes can be used to perform surface treatment on the wafers.

FIG. 14 is a flowchart of another method for processing a high-temperature-resistant hard and brittle material according to an embodiment of the present application. As shown in FIG. 14, the method of the present embodiment is based on the first embodiment shown in FIG. 13, Before the step of bonding the wafers, it further includes:

Step 21, polishing and hydrophilically treating the surface of the wafers.

Etched LGS cavities are bonded to prepare the LGS three-dimensional structure with a sealed cavity. Before bonding, the surface of the pre-bonded LGS substrate is first polished process to reduce the surface roughness of the substrate, and then hydrophilically treated by wet cleaning and plasma treatment. In specific applications, the LGS substrate is first wet cleaned with acetone, alcohol, a piranha solution (SPM), a standard cleaning solution No. 1 (SC1), a diluted hydrofluoric acid solution and deionized water, wherein the SC1 cleaning solution is a mixture of ammonia, hydrogen peroxide and water and can be used to remove particulate impurities and polymers on the wafers through oxidation and electrical repulsion.

After the wafer is cleaned, oxygen plasma is used to activate the surface of the LGS substrate. The plasma surface treatment can also have an effect of eliminating contamination on the surface of the wafer and further reducing the roughness of the surface. Oxidation reaction between active oxygen in oxygen plasma for plasma surface treatment and the organic matter on the surface of the material is carried out and the organic dirt on the surface of the material is decomposed into carbon dioxide, etc., by reacting the oxygen plasma with the organic dirt on the surface of the material, which may improve the bonding interface and is benefit to enhance the bonding strength.

After the above-mentioned surface treatment, two LGS substrates may be directly bonded by hot pressing. In specific applications, the bonding by hot pressing includes:

> Step 31, aligning grooves of two wafers whose surfaces have been polished and hydrophilically treated, or aligning the polished and hydrophilic-treated wafers with grooves on the surface and the wafers with no grooves etched on the surface, directly prebonding the polished surface to obtain a sample; and Step 32, fixing the sample in the mold, pressurizing and heating, so that the bonding surfaces of the two wafers are permanently bonded.

In the embodiment of the present application, for two polished and cleaned wafers, wafer substrates are directly bonded, that is, the grooves, of which surfaces have been pretreated, to be sealed to form a cavity are aligned or a wafer with a groove on the polished and hydrophilically treated surface is aligned with another wafer without grooves on the surface so that polished surfaces are in direct contact, the wafers are installed in a mold and a certain pressure is applied to the mold for prebonding to form a sample. The sample formed by prebonding is then subjected to high temperature treatment to cause physical and chemical reactions at the interfaces of the wafers so as to permanently bond the two wafers and the pressure application process continues during the above heating process to finally form the required sealed cavity and other structures.

The above-mentioned mold for fixing the sample includes upper and lower fixtures and a sleeve for fixing the fixtures both made of graphite. The mold may be configured to pre-bond and pressurize two wafers at room temperature to form a pre-bonded sample, and then the sample together with the mold is placed into the sintering furnace, a pressure is applied on the upper and lower surfaces in the vertical direction, and the they are heated to permanently bond the sample, thereby obtaining a sealed LGS cavity. Since the graphite mold has good physical and chemical properties and is easy to process and has still guaranteed strength at high temperatures without deformation, in the embodiment of the present application, a mold including the fixtures and the sleeve both made of graphite is used to guarantee the precision of the device during the pressurization and heating process of the wafers. In a high-temperature environment, atoms (Si, La, Ga, O) on two bonded surfaces break the constraints of the crystal lattice and undergo transposition and movement. Atom diffusion occurs and new polar bonds are created to connect the elements on two surfaces so as to form a predetermined structure such as a sealed cavity.

In the embodiment of the present application, the bonding strength of the wafer bonding surface for forming a predetermined structure, such as a sealed cavity is further enhanced by polishing and hydrophilically treating the wafer surface before the bonding operation; and the wafers are fixed by the mode during heating and applying pressure processes such that the shape of the wafers are kept stable during the bonding process, which is beneficial to improve the processing precision.

FIG. 17 is a schematic structural diagram of a device for processing a high-temperature-resistant hard and brittle material according to an embodiment of the present application. As shown in FIG. 17, the device according to the embodiment of the present application includes: a photoetching device 100, an etching device 200, and a bonding device 300, wherein the photoetching device 100 is configured to coat a photoresist to the surface of the cleaned high-temperature-resistant hard and brittle material wafer, and place a mask for photoetching and developing. In practical applications, the photoetching device 100 may include a coater, a photoetching machine, an exposure system, and the like. The etching device 200 is configured to etch the photoetched and developed wafer to form a groove for preparing a predetermined structure. In practical applications, the etching device 200 may be a device corresponding to wet etching device or an etching system corresponding to dry etching.

The above-mentioned photoetching device 100 and etching device 200 may be corresponding process device in the preparation of semiconductor devices in the prior art, and the detailed description thereof is omitted in the embodiment of the present application. The bonding device 300 is configured to bond the etched wafer and another wafer by hot pressing such that a contact surface of the bonded two wafers forms a permanently bonded surface and forming the predetermined structure at the corresponding groove. When bonding the two wafers together, the bonding device 300 according to the embodiment of the present application not only needs to apply a certain pressure to the wafers, but also needs to apply a certain high temperature, so that atoms in contact interfaces interpenetrates to form polar bonds under proper temperature and pressure for permanent bonding and the bonded interface has good air tightness and long-term stability. In practical applications, the bonding device 300 may include a container for heating and pressurizing, such as a hot-pressing furnace, a heating and pressurizing control system, a gas control system, a corresponding actuator mechanism controlled by the control system and performing corresponding operations and the like, wherein the gas control system is configured to control gas introduced during the bonding process, such as nitrogen. In practical applications, bonding by hot pressing can also be performed in a vacuum environment.

The control software of the bonding device 300 is based on the principle of feedback control. In the cavity of the bonding device, according to the ideal gas state equation, the pressure and temperature in the cavity satisfy the following relationship:

$$\rho_g = \frac{PM_g}{RT}$$

where $\rho_g$ is the density of the gas introduced into the cavity, P is a gas pressure, R is a standard gas constant, T is the temperature of the gas in the cavity, and $M_g$ is the molar mass of the introduced gas.

In the process of heating and pressurizing, the gas pressure and temperature in the cavity are in dynamic equilibrium. According to the above relationship, various parameters are monitored in real time and controlled in real time by a software to ensure that the temperature and pressure can be stably maintained within the preset range to meet actual needs. Two wafers are directly and permanently bonded together by hot pressing, and stable pressure needs to be applied. In specific applications, pressure can be applied through hydraulic devices. On-line monitoring and control of hydraulic devices are easier to implement and control through a programmable logic controller (PLC) which not only has high control accuracy, but also has strong anti-interference ability. Therefore, it can ensure the stability of the pressure during the bonding process of hard and brittle materials, thereby effectively reducing the processing failure rate of high-temperature-resistant hard and brittle materials.

The device according to the embodiment of the present application applies the above-mentioned process method to process the predetermined structures such as the sealed cavity of the high-temperature-resistant hard and brittle material, and the technical effects thereof are similar to those of the method, and will not be repeated.

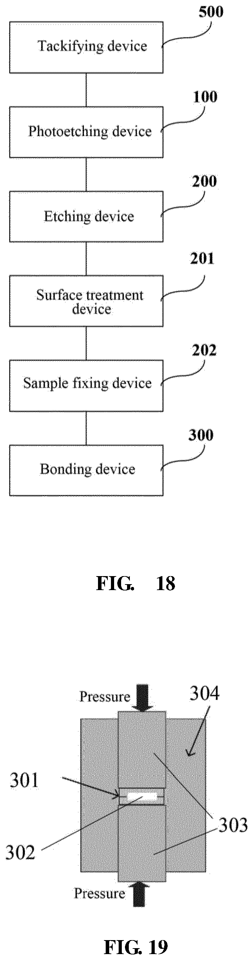

FIG. 18 is a schematic structural diagram of another device for processing a high-temperature-resistant hard and brittle material according to an embodiment of the present application. As shown in FIG. 18, the device according to the embodiment of the present application, on the basis of the embodiment shown in FIG. 17, further includes: a surface treatment device 201 configured to polish and hydrophilically treat the surface of the wafer; a sample fixing device 202 configured to align the grooves of the two wafers whose surfaces have been polished and hydrophilically treated, or align the polished and hydrophilic-treated wafer with a groove on the surface and a wafer with no groove etched on the surface, directly pre-bond the polished surface to obtain a sample and fix the sample in a mode for pressurizing and heating and a tackifying device 500 configured to coat a tackifier on the surface of the cleaned high-temperature-resistant hard and brittle material wafer. The surface treatment device 201, the sample fixing device 202 and the tackifying device 500 further included in above embodiment can be applied to the embodiment of the present application alone or at the same time and may be selectively used based on precision and requirements of the device to be processed in the specific application and is not limited in the embodiment of the present application.

FIG. 19 is a schematic structural diagram of a sample fixing device in FIG. 18. As shown in FIG. 19, the pre-bonded sample 301 is formed by polishing and cleaning two wafers that have been etched to form grooves, and then aligning and preliminarily pressing them. In order to form a permanent bond between interfaces of two wafers, the sample 301 needs to be placed in a hot-pressing furnace for heating and pressurizing. Therefore, in order to make the LGS wafers adhere firmly during the bonding process, in the embodiment of the present application, a sample fixing device is used to clamp and fix the sample 301. The sample fixing device includes upper and lower fixtures 303 and a sleeve 304 for fixing the fixtures made of graphite. The upper and lower fixtures 303 are configured to clamp the two wafers having grooves opposite to each other in the upper and lower directions and apply a pressure to form a cavity 302. In order to prevent preparation failure of the device due to being tilted and unsteady of the upper and lower fixtures during the pressurization process, in the embodiment of the present application, the sample and the upper and lower fixtures are placed in the sleeve 304 for stabilizing, and pressure is applied preliminarily for pre-bonding and the sample is placed in the hot-pressing furnace together with the upper and lower fixtures and sleeves when the subsequent heating and pressurizing are carried out in the hot-pressing furnace.

In specific applications, applying pressure to the two bonded wafers is achieved by applying pressure to the upper and lower fixtures, and applying pressure to the upper fixture can be performed by a hydraulic device, which is realized by PLC easily controlled in the engineering. The PLC control includes a PID control, calculations such as feed-forward compensation control and ratio control which can be selected according to the control requirements. The PLC can control the speed and pressure of the hydraulic oil on line so as to stably control the pressure on the fixture in real time and ensure the stability of the applied pressure, which is beneficial to bond the hard and brittle materials by hot pressing.

In practical applications, when a wafer with an etched groove is directly bonded to another wafer with a flat surface without etched grooves, the difficulty in aligning the two wafers may be reduced.

The piezoelectric crystal substrate in above embodiments is made of high-temperature-resistant hard and brittle materials, so that the surface acoustic wave device may be applied to high-temperature environments such as the combustion chamber of an aircraft engine. The materials known to those skilled in the art are hard and brittle materials such as a lanthanum gallium silicate crystal. Although these hard and brittle materials have excellent high temperature resistance and are ideal materials for the manufacture of surface acoustic wave devices, their hard and brittle properties make the manufacturing process of high-temperature-resistant sealed cavities very complicated, time-consuming and difficult. The method and device for processing high-temperature-resistant hard and brittle materials according to the embodiments of the present application just solve this problem, so that the temperature, pressure, vibration and other parameters of key parts of the aircrafts operating under severe conditions such as high temperature and high rotation can be detected in situ and in real time and it is of great significance for the material selection, structural design and protective measures of aircrafts.

Finally, it should be noted that the above embodiments are only used to explain the technical solutions of the present application, and are not limited thereto; although the present application is described in detail with reference to the foregoing embodiments, it should be understood by those skilled in the art that they can still modify the technical solutions described in the foregoing embodiments.

The scope of the present invention is defined by the claims.

**Claims**

1. A multi-parameter surface acoustic wave sensing device, comprising a high-temperature-resistant piezoelectric crystal substrate (1), a first resonator (2), a second resonator (3), and a third resonator (4) distal to each other, which correspond to a surface acoustic wave vibration sensor, a surface acoustic wave pressure sensor and a surface acoustic wave temperature sensor respectively, forming multiple surface acoustic wave sensors;

wherein a cantilever beam (11) having a first thickness (a) is formed on an edge portion of the high-temperature-resistant piezoelectric crystal substrate (1) at a side and a cavity (12) is formed in a remaining portion of the high-temperature-resistant piezoelectric crystal substrate (1) except the cantilever beam (11), the remaining portion has a second thickness (b), the first thickness (a) is smaller than the second thickness (b);

the high-temperature-resistant piezoelectric crystal substrate (1) has a flat first surface (S1), the first resonator (2) is formed on the first surface (S1) at a position corresponding to the cantilever beam (11) and configured to sense vibration parameters; the second resonator (3) is formed on the first surface (S1) at a position corresponding to the cavity (12) and configured to sense pressure parameters; and the third resonator (4) is formed on the first surface (S1) and configured to sense temperature parameters; and

the high-temperature-resistant piezoelectric crystal substrate (1) has a second surface (S2) opposite to the first surface (S1), an answering antenna (5) is formed on the second surface (S2) of the remaining portion, and is electrically connected to the first resonator (2), the second resonator (3) and the third resonator (4).

2. The device of claim 1, wherein the high-temperature-resistant piezoelectric crystal substrate (1) has a temperature-relatively sensitive propagation direction ($\gamma_T$), a pressure-relatively sensitive propagation direction ($\gamma_P$), and a vibration-relatively sensitive propagation direction ($\gamma_A$), the first resonator (2) is disposed along the vibration-relatively sensitive propagation direction ($\gamma_A$) so that the surface acoustic waves generated by exciting the first resonator (2) propagate along the vibration-relatively sensitive propagation direction ($\gamma_A$); the second resonator (3) is disposed along the pressure-relatively sensitive propagation direction ($\gamma_P$) so that the surface acoustic waves generated by exciting the second resonator (3) propagate along the pressure-relatively sensitive propagation direction ($\gamma_P$) and the third resonator (4) is disposed along the temperature-relatively sensitive propagation direction ($\gamma_T$) so that the surface acoustic waves generated by exciting the third resonator (4) propagate along the temperature-relatively sensitive propagation direction ($\gamma_T$).

3. The device of claim 1, wherein each of the first resonator (2), the second resonator (3) and the third resonator (4) comprises an interdigital transducer (P), a first reflecting grating (R1) located on a side of the interdigital transducer (P), and a second reflecting grating (R2) located on another side of the interdigital transducer (P), a first electrode group (p1) of the interdigital transducer (P) is electrically connected to a feeder terminal of the answering antenna (5) and a second electrode group (p2) of the interdigital transducer (P) is electrically connected to a ground terminal of the answering antenna (5).

4. The device of claim 3, further comprising an electrode through via (6) penetrating through the first surface (S1) and the second surface (S2), wherein the electrode through via (6) is filled with a conductive material for electrically connecting the answering antenna (5) with the first resonator (2), the second resonator (3), and the third resonator (4).

5. The device of claim 4, wherein the electrode through via (6) comprises a feeder through via (61) and a ground through via (62), the feeder terminal of the answering antenna (5) is electrically connected to first electrode groups (p1) of the first resonator (2), the second resonator (3), and the third resonator (4) through the feeder through via (61) and the ground terminal of the answering antenna (5) is electrically connected to second electrode groups (p2) of the first resonator (2), the second resonator (3), and the third resonator (4) through the ground through via (62).

6. The device of claim 5, wherein the ground through via (62) comprises a first ground through via (n1) and a second ground through via (n2) disposed at both sides of the feeder through via (61) symmetrically.

7. The device of claim 1, wherein the first resonator (2), the second resonator (3) and the third resonator (4) are disposed at 120 degree angles in the circumferential direction of the high-temperature-resistant piezoelectric crystal substrate (1).

8. The device of any one of claims 1 to 7, wherein the high-temperature-resistant piezoelectric crystal substrate (1) is prepared by bonding two high-temperature-resistant wafers (71,72) by hot pressing such that a contact surface of the bonded two wafers forms a permanently bonded surface, at least one of the bonded two wafers has a groove (711) formed by etching, and the groove (711) is sealed to form the cavity (12) after the piezoelectric crystal substrate (1) is formed by bonding.

9. The device of claim 8, wherein the high-temperature-resistant wafer (71,72) is made of hard and brittle material lanthanum gallium silicate.

10. A multi-parameter aircraft monitoring system, comprising a signal transmitting device (92), a signal processing device (93) and the multi-parameter surface acoustic wave sensing device of any one of claims 1 to 9;

the multi-parameter surface acoustic wave sensing device is adapted to be installed at a position to be measured, the answering antenna (5;911) of the multi-parameter surface acoustic wave sensing device is configured to receive an excitation signal transmitted by the signal transmitting device (92); the third resonator (4;912) is configured to generate a temperature response signal based on the excitation signal and a temperature at the position to be measured; the second resonator (3;913) is configured to generate a pressure response signal based on the excitation signal and a pressure at the position to be measured; the first resonator (2;914) is configured to generate a vibration response signal based the excitation signal and vibration at the position to be measured and the answering antenna (5;911) is further configured to transmit a superposed signal formed by superposing the temperature response signal, the pressure response signal and the vibration response signal; the signal transmitting device (92) is configured to transmit the excitation signal to the multi-parameter surface acoustic wave sensing device and forward the received superimposed signal to the signal processing device (93); and the signal processing device (93) is configured to separate the temperature response signal, the pressure response signal, and the vibration response signal from the superimposed signal and extract temperature parameters from the temperature response signal, and pressure parameters from the pressure response signal and vibration parameters from the vibration response signal.

11. The system of claim 10, wherein the signal processing device (93) comprises a denoising unit (931), a signal separating unit (933), and a parameter extracting unit (932), the denoising unit (931) is configured to denoise a superimposed signal to generate a denoised superimposed signal; the signal separating unit (933) is configured to separate a denoised temperature response signal, a denoised pressure response signal, and a denoised vibration response signal from the denoised superimposed signal and the parameter extracting unit (932) is configured to extract temperature parameters from the denoised temperature response signal, pressure parameters from the denoised pressure response signal, and vibration parameters from the denoised vibration response signal.

12. The system according to claim 10 or 11, wherein the signal transmitting device (92) comprises an interrogating antenna (921) and a signal transmitting-receiving control unit (922); the interrogating antenna (921) is configured to transmit the excitation signal and receive the superimposed signal; and the signal transmitting-receiving control unit (922) is configured to generate an excitation signal and forward the excitation signal to the interrogating antenna (921), and receive the superimposed signal from the interrogating antenna (921) and forward the superimposed signal to the signal processing device (93).

13. The system according to claim 10 or 11, further comprising an airborne control device (94) configured to obtain the temperature parameter, the pressure parameter, and the pressure parameter from the signal processing device (93) and control an aircraft to which the position to be measured belongs based on the temperature parameter, the pressure parameter, and the vibration parameter.

14. The system of claim 10 or 11, further comprising a communicating device (95) and a remote control center (96) connected to the communicating device (95) in a wireless manner, the communicating device (95) being configured to obtain the temperature parameter, the pressure parameter, and the vibration parameter from the signal processing device (93), and forward them to the remote control center (96); the remote control center (96) being configured to determine a safety status of the aircraft to which the position to be measured belongs based on the temperature parameter, the pressure parameter, and the vibration parameter.

15. A method for preparing the multi-parameter surface acoustic wave sensing device of any one of claims 1 to 9, comprising:

    step 1, cutting off an edge portion of a first high-temperature-resistant wafer (71) at a side, and etching a groove (711) and a first through via (712) on a remaining portion;
    step 2, etching a second through via at a position corresponding to the first through via (712) on a second high-temperature-resistant wafer (72) having the same diameter as the first high-temperature-resistant wafer (71);
    step 3, bonding the edge portion of the second high-temperature-resistant wafer (72) to the first high-temperature-resistant wafer (71) in an aligned mode to $s_{eal}$ the groove (711) and form a cavity (12), so that the first through via and the second through via communicate, and a portion of the second high-temperature-resistant wafer (72) that extends beyond the first high-temperature-resistant wafer (71) forms a cantilever beam (11), wherein the first high-temperature-resistant wafer (71) and the second high-temperature-resistant wafer (72) bonded together form the high-temperature-resistant piezoelectric crystal substrate (1);
    step 4, forming an answering antenna (5) on a second surface (S2) of the first high-temperature-resistant wafer (71) facing away from the second high-temperature-resistant wafer (72);
    step 5, filling the first through via (712) and the second through via with an electrically conductive material, and electrically connecting the electrically conductive material to the answering antenna (5); and
    step 6, forming a first resonator (2), a second resonator (3), and a third resonator (4) on a first surface (S1) of the second high-temperature-resistant wafer (72) distal to the first high-temperature-resistant wafer (71) and forming a first electrode wire (L1) and a second electrode wire (L3) electrically connected with the conductive material, wherein the first resonator (2) is formed on the cantilever beam (11), the second resonator (3) is formed on the cavity (12), and the first electrode wire (L1) is electrically connected to a first electrode group (p1) of the first resonator (2), the second resonator (3), and the third resonator (4), and the second electrode wire (L3) is electrically connected to a second electrode group (p2) of the first resonator (2), the second resonator (3), and the third resonator (4).

16. The method of claim 15, wherein the step 6 comprises:

    coating a positive photoresist on the first surface (S1);
    forming a mask structure of resonators through a photoetching mask process;
    forming a metal layer by magnetron sputtering on the first surface (S1) where the mask structure of resonators is formed,
    stripping off a remaining positive photoresist; and
    performing high-temperature annealing in a nitrogen atmosphere to form the first resonator (2), the second resonator (3), and the third resonator (4).

17. The method of claim 15 or 16, further comprising:

    sputtering a protective layer film on the first surface (S1); and
    coating wave-absorbing materials (K) between the first resonator (2) and the second resonator (3), between the second resonator (3) and the third resonator (4), and between the third resonator (4) and the first resonator (2).

**Patentansprüche**

1. Akustische Mehrparameteroberflächenwellensensorvorrichtung, aufweisend ein hochtemperaturbeständiges piezoelektrisches Kristallsubstrat (1), einen ersten Resonator (2), einen zweiten Resonator (3) und einen dritten Resonator (4), welche voneinander beabstandet vorliegen und zu einem akustischen Oberflächenwellenschwingungssensor, einem akustischen Oberflächenwellendrucksensor bzw. einem akustischen Oberflächenwellentemperatursensor korrespondieren, welche mehrere akustische Oberflächenwellensensoren bilden; wobei ein freitragendes Element (11) mit einer ersten Dicke (a) in einem Randbereich an einer Seite des hochtemperaturbeständigen piezoelektrischen Kristallsubstrats (1) ausgebildet ist und ein Hohlraum (12) in einem verbleibenden Bereich des hochtemperaturbeständigen piezoelektrischen Kristallsubstrats (1) mit Ausnahme des freitragenden Elements (11) ausgebildet ist, wobei der verbleibende Abschnitt eine zweite Dicke (b) aufweist, wobei die erste Dicke (a) kleiner ist als die zweite Dicke (b); das hochtemperaturbeständige piezoelektrische Kristallsubstrat (1) eine flache erste Oberfläche (S 1) aufweist, der erste Resonator (2) auf der ersten Oberfläche (S 1) an einer dem freitragenden Element (11) zugeordneten Position ausgebildet und konfiguriert ist, Schwingungsparameter zu erfassen; der zweite Resonator (3) auf der ersten Oberfläche (SI) an einer dem Hohlraum (12) zugeordneten Position ausgebildet und zum Erfassen von Druckparametern konfiguriert ist; und der dritte Resonator (4) auf der ersten Oberfläche (S 1) ausgebildet und zum Erfassen von Temperaturparametern konfiguriert ist; und das hochtemperaturbeständige piezoelektrische Kristallsubstrat (1) eine zweite Oberfläche (S 1), welche der ersten Oberfläche (S1) gegenüberliegt, eine Antwortantenne (5) aufweist, die auf der zweiten Oberfläche (S2) in dem verbleibenden Bereich ausgebildet ist und elektrisch mit dem ersten Resonator (2), dem zweiten Resonator (3) und dem dritten Resonator (4) verbunden ist.

2. Vorrichtung nach Anspruch 1, wobei das hochtemperaturbeständige piezoelektrische Kristallsubstrat (1) eine temperaturempfindliche Ausbreitungsrichtung (YT), eine druckempfindliche Ausbreitungsrichtung (yP) und eine schwingungsempfindliche Ausbreitungsrichtung (y A) aufweist, der erste Resonator (2) entlang der schwingungsempfindlichen Ausbreitungsrichtung (yA) angeordnet ist, so dass sich die durch Anregung des ersten Resonators (2) erzeugten akustischen Oberflächenwellen entlang der schwingungsempfindlichen Ausbreitungsrichtung (yA) ausbreiten; der zweite Resonator (3) entlang der druckempfindlichen Ausbreitungsrichtung (yP) angeordnet ist, so dass sich die durch Anregung des zweiten Resonators (3) erzeugten akustischen Oberflächenwellen entlang der druckempfindlichen Ausbreitungsrichtung (yP) ausbreiten, und der dritte Resonator (4) entlang der temperaturempfindlichen Ausbreitungsrichtung (YT) angeordnet ist, so dass sich die durch Anregung des dritten Resonators (4) erzeugten akustischen Oberflächenwellen entlang der temperaturempfindlichen Ausbreitungsrichtung (yT) ausbreiten.

3. Vorrichtung nach Anspruch 1, wobei der erste Resonator (2), der zweite Resonator (3) und der dritte Resonator (4) jeweils einen Interdigitalwandler (P), ein erstes reflektierendes Gitter (RI), welches auf einer ersten Seite des Interdigitalwandlers (P) angeordnet ist, und ein zweites reflektierendes Gitter (R2), welches auf einer zweiten Seite des Interdigitalwandlers (P) angeordnet ist, aufweisen, eine erste Elektrodengruppe (p1) des Interdigitalwandlers (P) elektrisch mit einem Versorgungsanschluss der Antwortantenne (5) verbunden ist und eine zweite Elektrodengruppe (p2) des Interdigitalwandlers (P) elektrisch mit einem Masseanschluss der Antwortantenne (5) verbunden ist.

4. Vorrichtung nach Anspruch 3, zusätzlich aufweisend einen Elektrodendurchgang (6), wobei der Elektrodendurchgang (6) die erste Oberfläche (S1) und die zweite Oberfläche (S2) durchdringt, wobei der Elektrodendurchgang (6) ein leitendes Material aufweist, sodass die Antwortantenne (5) mit dem ersten Resonator (2), dem zweiten Resonator (3) und dem dritten Resonator (4) elektrisch verbunden ist.

5. Vorrichtung nach Anspruch 4, wobei der Elektrodendurchgang (6) einen Einspeisungsdurchgang (61) und einen Erdungsdurchgang (62) aufweist, der Versorgungsanschluss der Antwortantenne (5) elektrisch mit den ersten Elektrodengruppen (pl) des ersten Resonators (2), des zweiten Resonators (3) und des dritten Resonators (4) verbunden ist und der Masseanschluss der Antwortantenne (5) über den Einspeisungsdurchgang (61) elektrisch mit den zweiten Elektrodengruppen (p2) des ersten Resonators (2), des zweiten Resonators (3) und des dritten Resonators (4) verbunden ist.

6. Vorrichtung nach Anspruch 5, wobei der Erdungsdurchgang (62) eine erste Erdungsdurchführung (nl) und eine zweite Erdungsdurchführung (n2) aufweist, welche symmetrisch an beiden Seiten des Einspeisungsdurchgangs (61) angeordnet sind.

7. Vorrichtung nach Anspruch 1, wobei der erste Resonator (2), der zweite Resonator (3) und der dritte Resonator (4) in Umfangsrichtung des hochtemperaturbeständigen piezoelektrischen Kristallsubstrats (1) in einem Winkel von 120 Grad zueinander angeordnet sind.

8. Vorrichtung nach einem der Ansprüche 1 bis 7, wobei das hochtemperaturbeständige piezoelektrische Kristallsubstrat (1) durch Verbinden zweier hochtemperaturbeständiger Wafer (71, 72) mittels Heißpressen hergestellt ist, sodass eine Kontaktfläche der verbundenen zwei Wafer eine dauerhaft verbundene Oberfläche bildet, mindestens einer der verbundenen zwei Wafer eine durch Ätzen gebildete Rille (711) aufweist und die Rille (711) nach dem Bilden des piezoelektrischen Kristallsubstrat (1) zum Ausbilden des Hohlraumes (12) versiegelt ist.

9. Vorrichtung nach Anspruch 8, wobei die hochtemperaturbeständigen Wafer (71, 72) aus dem harten und spröden Material Lanthangalliumsilikat hergestellt sind.

10. Mehrparameter-Flugzeugüberwachungssystem, aufweisend eine Signalübertragungsvorrichtung (92), eine Signalverarbeitungsvorrichtung (93) und eine akustische Mehrparameteroberflächenwellensensorvorrichtung nach einem der Ansprüche 1 bis 9, wobei die akustische Mehrparameteroberflächenwellensensorvorrichtung ausgeführt und eingerichtet ist, an einer zu messenden Position installiert zu werden; wobei die Antwortantenne (5; 911) der akustischen Mehrparameteroberflächenwellensensorvorrichtung konfiguriert ist, mittels der Signalübertragungsvorrichtung (92) ein Anregungssignal zu empfangen; der dritte Resonator (4; 912) konfiguriert ist, ein Temperaturantwortsignal basierend auf dem Anregungssignal und einer Temperatur an der zu messenden Position zu erzeugen; der zweite Resonator (3; 913) konfiguriert ist, ein Druckantwortsignal basierend auf dem Anregungssignal und einem Druck an der zu messenden Position zu erzeugen; der erste Resonator (2; 914) konfiguriert ist, ein Schwingungsantwortsignal basierend auf dem Anregungssignal und einer Schwingung an der zu messenden Position zu erzeugen, und die Antwortantenne (5; 911) ferner konfiguriert ist, ein überlagertes Signal zu übertragen, welches durch Überlagerung des Temperaturantwortsignals, des Druckantwortsignals und des Schwingungsantwortsignal gebildet ist; die Signalübertragungsvorrichtung (92) konfiguriert ist, das Anregungssignal an die akustische Mehrparameteroberflächenwellensensorvorrichtung zu übertragen und das empfangene überlagerte Signal an die Signalverarbeitungsvorrichtung (93) weiterzuleiten; wobei die Signalverarbeitungsvorrichtung (93) konfiguriert ist, das Temperaturantwortsignal, das Druckantwortsignal und das Schwingungsantwortsignal von dem überlagerten Signal zu trennen und Temperaturparameter aus dem Temperaturantwortsignal, Druckparameter aus dem Druckantwortsignal und Schwingungsparameter aus dem Schwingungsantwortsignal zu extrahieren.

11. System nach Anspruch 10, wobei die Signalverarbeitungsvorrichtung (93) eine Entrauschungseinheit (931), eine Signaltrenneinheit (933) und eine Parameterextraktionseinheit (932) aufweist, wobei die Entrauschungseinheit (931) konfiguriert ist, ein überlagertes Signal zu entrauschen, um ein entrauschtes überlagertes Signal zu erzeugen; die Signaltrenneinheit (933) konfiguriert ist, aus dem entrauschten überlagerten Signal ein entrauschtes Temperaturantwortsignal, ein entrauschtes Druckantwortsignal und ein entrauschtes Schwingungsantwortsignal zu separieren, und die Parameterextraktionseinheit (932) konfiguriert ist, Temperaturparameter aus dem entrauschten Temperaturantwortsignal, Druckparameter aus dem entrauschten Druckantwortsignal und Schwingungsparameter aus dem entrauschten Schwingungsantwortsignal zu extrahieren.

12. System nach Anspruch 10 oder 11, wobei die Signalübertragungsvorrichtung (92) eine Abfrageantenne (921) und eine Signalsende-Empfangs-Steuereinheit (922) aufweist; wobei die Abfrageantenne (921) konfiguriert ist, das Anregungssignal zu senden und das überlagerte Signal zu empfangen; und die Signalsende-Empfangs-Steuereinheit (922) konfiguriert ist, ein Anregungssignal zu erzeugen und das Anregungssignal an die Abfrageantenne (921) weiterzuleitet und das überlagerte Signal von der Abfrageantenne (921) zu empfangen und das überlagerte Signal an die Signalverarbeitungsvorrichtung (93) weiterzuleitet.

13. System nach Anspruch 10 oder 11, zusätzlich aufweisend eine Flugsteuerungsvorrichtung (94), welche konfiguriert ist, den Temperaturparameter, den Druckparameter und den Druckparameter von der Signalverarbeitungsvorrichtung (93) zu empfangen und ein Flugzeug, an welchem die zu messende Position angeordnet ist, auf der Grundlage des Temperaturparameters, des Druckparameters und des Schwingungsparameters zu steuern.

14. System nach Anspruch 10 oder 11, zusätzlich aufweisend eine Kommunikationsvorrichtung (95) und eine Fernsteuerungszentrale (96), welche mit der Kommunikationsvorrichtung (95) drahtlos verbunden ist, wobei die Kommunikationsvorrichtung (95) konfiguriert ist, den Temperaturparameter, den Druckparameter und den Schwingungsparameter von der Signalverarbeitungsvorrichtung (93) zu erhalten und sie an die Fernsteuerungszentrale (96) weiterzuleiten; wobei die Fernsteuerungszentrale (96) konfiguriert ist, unter Berücksichtigung des Temperaturparameters, des Druckparameters und des Schwingungsparameters einen Sicherheitsstatus des Flugzeugs, an welchem die zu messende Position angeordnet ist, zu bestimmen.

15. Verfahren zur Herstellung eines akustischen Mehrparameteroberflächenwellensensors nach einem der Ansprüche 1 bis 9, umfassend: Schritt 1, Abschneiden eines Randabschnitts eines ersten hochtemperaturbeständigen Wafers (71) an einer Seite und Ätzen einer Rille (711) und eines ersten Durchgangslochs (712) in einem verbleibenden Bereich; Schritt 2, Ätzen eines zweiten Durchgangslochs in einen zweiten hochtemperaturbeständigen Wafer (72) an einer Position, die zu dem ersten Durchgangsloch (712) korrespondiert, wobei der zweite hochtemperaturbeständige Wafer (72) den gleichen Durchmesser wie der erste hochtemperaturbeständige Wafer (71) hat; Schritt 3, Verbinden des Randabschnitts des zweiten hochtemperaturbeständigen Wafers (72) mit dem ersten hochtemperaturbeständigen Wafer (71), wobei die hochtemperaturbeständigen Wafer (71, 72) derart zueinander ausgerichtet sind, dass die Rille (711) und der Hohlraum (12) abgedichtet sind, so dass das erste Durchgangsloch und das zweite Durchgangsloch miteinander in Verbindung stehen, und ein Teil des zweiten hochtemperaturbeständigen Wafers (72), der sich über den ersten hochtemperaturbeständigen Wafer (71) hinaus erstreckt, ein freitragendes Element (11) bildet, wobei der erste hochtemperaturbeständige Wafer (71) und der zweite hochtemperaturbeständige Wafer (72), die miteinander verbunden sind, das hochtemperaturbeständige piezoelektrische Kristallsubstrat (1) bilden; Schritt 4, Ausbilden einer Antwortantenne (5) auf einer zweiten Oberfläche (S2) des ersten hochtemperaturbeständigen Wafers (71), wobei die zweite Oberfläche (S2) dem zweiten hochtemperaturbeständigen Wafer (72) abgewandt orientiert ist; Schritt 5, Füllen des ersten Durchgangslochs (712) und des zweiten Durchgangslochs mit einem elektrisch leitenden Material und elektrisches Verbinden des elektrisch leitenden Materials mit der Antwortantenne (5); und Schritt 6, Ausbilden eines ersten Resonators (2), eines zweiten Resonators (3) und eines dritten Resonators (4) auf einer ersten Oberfläche (S1) des zweiten hochtemperaturbeständigen Wafers (72) distal zu dem ersten hochtemperaturbeständigen Wafer (71) und Ausbilden eines ersten Elektrodendrahtes (LI) und eines zweiten Elektrodendrahtes (L3), die elektrisch mit dem leitenden Material verbunden sind, wobei der erste Resonator (2) auf dem freitragenden Element (11) ausgebildet ist, der zweite Resonator (3) auf dem Hohlraum (12) ausgebildet ist, und der erste Elektrodendraht (L1) elektrisch mit einer ersten Elektrodengruppe (pl) des ersten Resonators (2), des zweiten Resonators (3) und des dritten Resonators (4) verbunden ist, und der zweite Elektrodendraht (L3) elektrisch mit einer zweiten Elektrodengruppe (p2) des ersten Resonators (2), des zweiten Resonators (3) und des dritten Resonators (4) verbunden ist.

16. Verfahren nach Anspruch 15, wobei der Schritt 6 zusätzlich umfasst: Beschichten der ersten Oberfläche (S1) mit einem positiven Fotolack; Ausbilden einer Maskenstruktur von Resonatoren durch einen Fotoätzmaskenprozess; Ausbilden einer Metallschicht durch Magnetronsputtern auf der ersten Oberfläche (S1), wo die Maskenstruktur von Resonatoren ausgebildet ist, Ablösen eines verbleibenden positiven Fotolacks; und Durchführen eines Hochtemperaturglühprozesses in einer Stickstoffatmosphäre, um den ersten Resonator (2), den zweiten Resonator (3) und den dritten Resonator (4) auszubilden.

17. Verfahren nach Anspruch 15 oder 16, zusätzlich umfassend: Sputtern eines Schutzschichtfilms auf die erste Oberfläche (S 1); und Beschichten von wellenabsorbierenden Materialien (K) zwischen dem ersten Resonator (2) und dem zweiten Resonator (3), zwischen dem zweiten Resonator (3) und dem dritten Resonator (4) und zwischen dem dritten Resonator (4) und dem ersten Resonator (2).

**Revendications**

1. Dispositif de détection d'ondes acoustiques de surface à paramètres multiples, comprenant un substrat cristallin piézoélectrique résistant aux températures élevées (1), un premier résonateur (2), un deuxième résonateur (3), et un troisième résonateur (4) distaux les uns par rapport aux autres, qui correspondent à un capteur de vibration d'ondes acoustiques de surface, à un capteur de pression d'ondes acoustiques de surface et à un capteur de température d'ondes acoustiques de surface respectivement, formant de multiples capteurs d'ondes acoustiques de surface ;

dans lequel une poutre en porte-à-faux (11) présentant une première épaisseur (a) est formée sur une partie de bord d'un substrat cristallin piézoélectrique résistant aux températures élevées (1) au niveau d'un côté et une cavité (12) est formée dans une partie restante du substrat cristallin piézoélectrique résistant aux températures élevées (1) à l'exception de la poutre en porte-à-faux (11), la partie restante présente une seconde épaisseur (b), la première épaisseur (a) est inférieure à la seconde épaisseur (b) ;
le substrat cristallin piézoélectrique résistant aux températures élevées (1) présente une première surface (S1) plate, le premier résonateur (2) est formé sur la première surface (S1) au niveau d'une position correspondant à la poutre en porte-à-faux (11) et configuré pour détecter des paramètres de vibration ; le deuxième résonateur (3) est formé sur la première surface (S1) au niveau d'une position correspondant à la cavité (12) et configuré pour détecter des paramètres de pression ; et le troisième résonateur (4) est formé sur la première surface (S1) et configuré pour détecter des paramètres de température ; et

le substrat cristallin piézoélectrique résistant aux températures élevées (1) présente une seconde surface (S2) opposée à la première surface (S1), une antenne de réponse (5) est formée sur la seconde surface (S2) de la partie restante, et est électriquement connectée au premier résonateur (2), au deuxième résonateur (3) et au troisième résonateur (4).

2. Dispositif selon la revendication 1, dans lequel le substrat cristallin piézoélectrique résistant aux températures élevées (1) présente une direction de propagation sensible à la température ($\gamma$T), une direction de propagation sensible à la pression ($\gamma$P), et une direction de propagation sensible à la vibration ($\gamma$A), le premier résonateur (2) est disposé le long de la direction de propagation sensible à la vibration ($\gamma$A) de sorte que les ondes acoustiques de surface générées par l'excitation du premier résonateur (2) se propagent le long de la direction de propagation sensible à la vibration ($\gamma$A) ; le deuxième résonateur (3) est disposé le long de la direction de propagation sensible à la pression ($\gamma$P) de sorte que les ondes acoustiques de surface générées par l'excitation du deuxième résonateur (3) se propagent le long de la direction de propagation sensible à la pression ($\gamma$P) et le troisième résonateur (4) est disposé le long de la direction de propagation sensible à la température ($\gamma$T) de sorte que les ondes acoustiques générées par excitation du troisième résonateur (4) se propagent le long de la direction de propagation sensible à la température ($\gamma$T).

3. Dispositif selon la revendication 1, dans lequel chacun du premier résonateur (2), du deuxième résonateur (3) et du troisième résonateur (4) comprend un transducteur interdigité (P), un premier réseau réfléchissant (R1) situé sur un côté du transducteur interdigité (P), et un second réseau réfléchissant (R2) situé sur un autre côté du transducteur interdigité (P), un premier groupe d'électrodes (p1) du transducteur interdigité (P) est électriquement connecté à une borne d'alimentation de l'antenne de réponse (5) et un second groupe d'électrodes (p2) du transducteur interdigité (P) est électriquement connecté à une borne de terre de l'antenne de réponse (5).

4. Dispositif selon la revendication 3, comprenant en outre un trou d'interconnexion d'électrode (6) pénétrant à travers la première surface (S1) et la seconde surface (S2), dans lequel le trou d'interconnexion d'électrode (6) est rempli d'un matériau conducteur pour la connexion électrique de l'antenne de réponse (5) au premier résonateur (2), au deuxième résonateur (3), et au troisième résonateur (4).

5. Dispositif selon la revendication 4, dans lequel le trou d'interconnexion d'électrode (6) comprend un trou d'interconnexion d'alimentation (61) et un trou d'interconnexion de terre (62), la borne d'alimentation de l'antenne de réponse (5) est électriquement connectée aux premiers groupes d'électrodes (p1) du premier résonateur (2), du deuxième résonateur (3), et du troisième résonateur (4) à travers le trou d'interconnexion d'alimentation (61) et la borne de terre de l'antenne de réponse (5) est électriquement connectée aux seconds groupes d'électrodes (p2) du premier résonateur (2), du deuxième résonateur (3), et du troisième résonateur (4) à travers le trou d'interconnexion de terre (62).

6. Dispositif selon la revendication 5, dans lequel le trou d'interconnexion de terre (62) comprend un premier trou d'interconnexion de terre (n1) et un second trou d'interconnexion de terre (n2) disposés au niveau des deux côtés du trou d'interconnexion d'alimentation (61) symétriquement.

7. Dispositif selon la revendication 1, dans lequel le premier résonateur (2), le deuxième résonateur (3) et le troisième résonateur (4) sont disposés selon des angles de 120 degrés dans la direction circonférentielle du substrat cristallin piézoélectrique résistant aux températures élevées (1).

8. Dispositif selon l'une quelconque des revendications 1 à 7, dans lequel le substrat cristallin piézoélectrique résistant aux températures élevées (1) est préparé par collage de deux tranches résistantes aux températures élevées (71, 72) par pression à chaud de sorte qu'une surface de contact des deux tranches collées forme une surface collée de façon permanente, au moins une des deux tranches collées présente une rainure (711) formée par gravure, et la rainure (711) est scellée pour former la cavité (12) après la formation du substrat cristallin piézoélectrique (1) par collage.

9. Dispositif selon la revendication 8, dans lequel la tranche résistante aux températures élevées (71, 72) est composée de silicate de lanthane gallium dur et cassant.

10. Système de surveillance d'aéronef à paramètres multiples, comprenant un dispositif de transmission de signal (92), un dispositif de traitement de signal (93) et le dispositif de détection d'ondes acoustiques de surface à paramètres multiples selon l'une quelconque des revendications 1 à 9 ;

le dispositif de détection d'ondes acoustiques de surface à paramètres multiples est conçu pour être installé au niveau d'une position devant être mesurée, l'antenne de réponse (5 ; 911) du dispositif de détection d'ondes acoustiques de surface à paramètres multiples est configurée pour recevoir un signal d'excitation transmis par le dispositif de transmission de signal (92) ; le troisième résonateur (4 ; 912) est configuré pour générer un signal de réponse à la température basé sur le signal d'excitation et une température au niveau de la position devant être mesurée ; le deuxième résonateur (3 ; 913) est configuré pour générer un signal de réponse à la pression basé sur le signal d'excitation et une pression au niveau de la position devant être mesurée ; le premier résonateur (2 ; 914) est configuré pour générer un signal de réponse à la vibration basé sur le signal d'excitation et une vibration au niveau de la position devant être mesurée et l'antenne de réponse (5 ; 911) est en outre configurée pour transmettre un signal superposé formé par la superposition du signal de réponse à la température, du signal de réponse à la pression et du signal de réponse à la vibration ;
le dispositif de transmission de signal (92) est configuré pour transmettre le signal d'excitation au dispositif de détection d'ondes acoustiques de surface à paramètres multiples et transférer le signal superposé reçu au dispositif de traitement de signal (93) ; et
le dispositif de traitement de signal (93) est configuré pour séparer le signal de réponse à la température, le signal de réponse à la pression, et le signal de réponse à la vibration provenant du signal superposé et extraire des paramètres de température du signal de réponse à la température, et des paramètres de pression provenant du signal de réponse à la pression et des paramètres de vibration provenant du signal de réponse à la vibration.

11. Système selon la revendication 10, dans lequel le dispositif de traitement de signal (93) comprend une unité de débruitage (931), une unité de séparation de signal (933), et une unité d'extraction de paramètre (932), l'unité de débruitage (931) est configurée pour débruiter un signal superposé pour générer un signal superposé débruité ; l'unité de séparation de signal (933) est configurée pour séparer un signal de réponse à la température débruité, un signal de réponse à la pression débruité, et un signal de réponse à la vibration débruité provenant du signal superposé débruité et l'unité d'extraction de paramètre (932) est configurée pour extraire des paramètres de température provenant du signal de réponse à la température débruité, des paramètres de pression provenant du signal de réponse à la pression débruité, et des paramètres de vibration provenant du signal de réponse à la vibration débruité.

12. Système selon la revendication 10 ou 11, dans lequel le dispositif de transmission de signal (92) comprend une antenne d'interrogation (921) et une unité de commande de transmission-réception de signal (922) ; l'antenne d'interrogation (921) est configurée pour transmettre le signal d'excitation et recevoir le signal superposé ; et l'unité de commande de transmission-réception de signal (922) est configurée pour générer un signal d'excitation et transférer le signal d'excitation à l'antenne d'interrogation (921), et recevoir le signal superposé provenant de l'antenne d'interrogation (921) et transférer le signal superposé au dispositif de traitement de signal (93).

13. Système selon la revendication 10 ou 11, comprenant en outre un dispositif de commande aéroporté (94) configuré pour obtenir le paramètre de température, le paramètre de pression, et le paramètre de pression provenant du dispositif de traitement de signal (93) et commander un aéronef auquel la position devant être mesurée appartient sur la base du paramètre de température, du paramètre de pression, et du paramètre de pression.

14. Système selon la revendication 10 ou 11, comprenant en outre un dispositif de communication (95) et un centre de commande à distance (96) connecté au dispositif de communication (95) dans un mode sans fil, le dispositif de communication (95) étant configuré pour obtenir le paramètre de température, le paramètre de pression, et le paramètre de vibration provenant du dispositif de traitement de signal (93), et les transférer au centre de commande à distance (96) ; le centre de commande à distance (96) étant configuré pour déterminer un statut de sécurité de l'aéronef auquel la position devant être mesurée appartient sur la base du paramètre de température, du paramètre de pression, et du paramètre de vibration.

15. Procédé de préparation du dispositif de détection d'ondes acoustiques de surface à paramètres multiples selon l'une quelconque des revendications 1 à 9, comprenant :

en étape 1, la découpe d'une partie de bord d'une première tranche résistante aux températures élevées (71) au niveau d'un côté, et la gravure d'une rainure (711) et d'un premier trou d'interconnexion (712) sur une partie restante ;

en étape 2, la gravure d'un second trou d'interconnexion par le biais d'une position correspondant au premier trou d'interconnexion (712) sur une seconde tranche résistante aux températures élevées (72) présentant le même diamètre que la première tranche résistante aux températures élevées (71) ;

en étape 3, le collage de la partie de bord de la seconde tranche résistante aux températures élevées (72) sur la première tranche résistante aux températures élevées (71) dans un mode aligné pour sceller la rainure (711) et former une cavité (12), de sorte que le premier trou d'interconnexion et le second trou d'interconnexion communiquent, et une partie de la seconde tranche résistante aux températures élevées (72) qui s'étend au-delà de la première tranche résistante aux températures élevées (71) forme une poutre en porte-à-faux (11), dans lequel la première tranche résistante aux températures élevées (71) et la seconde tranche résistante aux températures élevées (72) collées ensemble forment le substrat cristallin piézoélectrique résistant aux températures élevées (1) ;

en étape 4, la formation d'une antenne de réponse (5) sur une seconde surface (S2) de la première tranche résistante aux températures élevées (71) dirigée à l'opposé de la seconde tranche résistante aux températures élevées (72) ;

en étape 5, le remplissage du premier trou d'interconnexion (712) et du second trou d'interconnexion avec un matériau électroconducteur, et la connexion électrique du matériau électroconducteur à l'antenne de réponse (5) ; et

en étape 6, la formation d'un premier résonateur (2), d'un deuxième résonateur (3), et d'un troisième résonateur (4) sur une première surface (S1) de la seconde tranche résistante aux températures élevées (72) distale à la première tranche résistante aux températures élevées (71) et la formation d'un premier fil d'électrode (L1) et d'un second fil d'électrode (L3) électriquement connecté au matériau conducteur, dans lequel le premier résonateur (2) est formé sur la poutre en porte-à-faux (11), le deuxième résonateur (3) est formé sur la cavité (12), et le premier fil d'électrode (L1) est électriquement connecté à un premier groupe d'électrodes (p1) du premier résonateur (2), du deuxième résonateur (3), et du troisième résonateur (4), et le second fil d'électrode (L3) est électriquement connecté à un second groupe d'électrodes (p2) du premier résonateur (2), du deuxième résonateur (3), et du troisième résonateur (4).

16. Procédé selon la revendication 15, dans lequel l'étape 6 comprend :

le revêtement d'une résine photosensible sur la première surface (S1) ;

la formation d'une structure de masque de résonateurs par le biais d'un processus de masque de photogravure ;

la formation d'une couche de métal par pulvérisation cathodique magnétron sur la première surface (S1) où la structure de masque de résonateurs est formée ;

le retrait d'une résine photosensible positive restante ; et

la réalisation d'un recuit à haute température dans une atmosphère d'azote pour former le premier résonateur (2), le deuxième résonateur (3), et le troisième résonateur (4).

17. Procédé selon la revendication 15 ou 16, comprenant en outre :

la pulvérisation cathodique d'un film de couche protectrice sur la première surface (S1) ; et

le revêtement de matériaux absorbant les ondes (K) entre le premier résonateur (2) et le deuxième résonateur (3), entre le deuxième résonateur (3) et le troisième résonateur (4), et entre le troisième résonateur (4) et le premier résonateur (2).

**FIG. 1**

**FIG. 2**

**FIG. 3**

**FIG. 4**

**FIG. 5**

Cutting off an edge portion of a first high-temperature-resistant wafer at a side, and etching a groove and a first through via on a remaining portion — 601

Etching a second through via at a position corresponding to the first through via on a second high-temperature-resistant wafer having the same diameter as the first high-temperature-resistant wafer — 602

Bonding the edge portion of the second high-temperature-resistant wafer to the first high-temperature-resistant wafer in an aligned mode to seal a groove and form a cavity, so that the first through via and the second through via communicate — 603

Forming an answering antenna on a second surface of the first high-temperature-resistant wafer distal to the second high-temperature-resistant wafer — 604

Filling the first through via and the second through via with a conductive material — 605

Forming a first resonator, a second resonator, and a third resonator on a first surface of the second high-temperature-resistant wafer distal to the first high-temperature-resistant wafer and forming a first electrode wire and a second electrode wire electrically connected with the conductive material — 606

**FIG. 6**

**FIG. 7a**

**FIG. 7b**

**FIG. 7c**

**FIG. 7d**

**FIG. 7e**

**FIG. 7f**

**FIG. 7g**

Etching a cavity    Bonding the cavity    Screen printing

Ion plating and stripping    Coating, photoetching, developing    Lead connecting    Sintering

Annealing    Protective layer film    Wave absorbing material

**FIG. 8**

912    913    91

| Surface acoustic wave temperature sensor | Surface acoustic wave pressure sensor | Surface acoustic wave vibration sensor |

914

Answering antenna

911

Excited signal    Superimposed signal

Signal transmitting device

92

Signal processing device

93

**FIG. 9**

**FIG. 10**

**FIG. 11a**

B

S2

A

911

D

**FIG. 11b**

| Signal acquiring device | Signal transmitting device | Signal processing device |
| --- | --- | --- |

Signal transmitting-receiving control unit

Denoising unit

Signal separating unit

Parameter extracting unit

Remote control center

Communicating device

91 92 94 93 932

911 921 922 931 933 96 95

A

**FIG. 12**

Coating a photoresist on a surface of a cleaned high-temperature-resistant hard and brittle material wafer, and placing a mask for photoetching and developing | 10

Etching the photoetched and developed wafer to form a groove for preparing a predetermined structure | 20

Bonding the etched wafer to another wafer by hot pressing such that a contact surface of the bonded two wafers forms a permanently bonded surface and forming the predetermined structure at the corresponding groove | 30

**FIG. 13**

Coating a photoresist on a surface of a cleaned high-temperature-resistant hard and brittle material wafer, and placing a mask for photoetching and developing | **10**

Etching the photoetched and developed wafer to form a groove for preparing a predetermined structure. | **20**

Polishing and hydrophilically treating the surface of the wafers | **21**

Aligning grooves of two wafers whose surfaces have been polished and hydrophilically treated, or aligning the polished and hydrophilic-treated wafers with grooves on the surface and the wafers with no grooves etched on the surface, directly pre-bonding the polished surface to obtain a sample | **31**

Fixing the sample in a mold, pressurizing and heating, so that the bonding surfaces of the two wafers are permanently bonded | **32**

**FIG. 14**

**FIG. 15**

**FIG. 16**

**FIG. 17**

**FIG. 18**

**FIG. 19**

## REFERENCES CITED IN THE DESCRIPTION

**Patent documents cited in the description**

- US 2012242190 A1
- GB 2124429 A